# EUROPÄISCHE PATENTSCHRIFT

(11) **EP 3 709 516 B1**
(45) Veröffentlichungstag und Bekanntmachung des Hinweises auf die Patenterteilung: **17.01.2024**
(21) Anmeldenummer: 20160738.9
(22) Anmeldetag: 03.03.2020
(51) Int. Cl.: H03K 3/78, G09C 1/00, H04L 9/06

(54) **VORRICHTUNG UND VERFAHREN ZUR HARDWARE-BASIERTEN DATENVERSCHLÜSSELUNG MIT KOMPLEMENTÄREN WIDERSTANDSSCHALTERN**
DEVICE AND METHOD FOR HARDWARE-BASED DATA ENCRYPTION WITH COMPLEMENTARY RESISTANCE SWITCHES
DISPOSITIF ET PROCÉDÉ DE CHIFFREMENT DE DONNÉES BASÉ SUR LE MATÉRIEL POURVU DE COMMUTATEURS DE RÉSISTANCE COMPLÉMENTAIRES

(30) Priorität: 11.03.2019 DE 102019203288
(43) Veröffentlichungstag der Anmeldung: 16.09.2020
(73) Patentinhaber: Fraunhofer-Gesellschaft zur Förderung der angewandten Forschung e.V., 80686 München (DE)
(72) Erfinder: DU, Nan, 09126 Chemnitz (DE); SCHMIDT, Heidemarie, 09126 Chemnitz (DE); ECKE, Ramona, 09126 Chemnitz (DE); SCHULZ, Stefan, 09126 Chemnitz (DE)
(74) Vertreter: Schairer, Oliver Michael

(56) Entgegenhaltungen:
- US-A1- 2015 358 151
- DU NAN ET AL: "Novel implementation of memristive systems for data encryption and obfuscation", JOURNAL OF APPLIED PHYSICS, AMERICAN INSTITUTE OF PHYSICS, US, Bd. 115, Nr. 12, 28. März 2014 (2014-03-28), XP012183617, ISSN: 0021-8979, DOI: 10.1063/1.4869262 [gefunden am 1901-01-01]
- ASCOLI ALON ET AL: "BiFeO3 memristor-based encryption of medical data", 2016 IEEE INTERNATIONAL SYMPOSIUM ON CIRCUITS AND SYSTEMS (ISCAS), IEEE, 22. Mai 2016 (2016-05-22), Seiten 1602-1605, XP032941877, DOI: 10.1109/ISCAS.2016.7538871 [gefunden am 2016-08-09]

## Beschreibung

Die Anmeldung betrifft die hardware-basierte Verschlüsselung von Daten mit einer elektronischen Schaltung, und, im Speziellen, eine Vorrichtung und ein Verfahren zur hardware-basierten Datenverschlüsselung mit komplementären Widerstandsschaltern. Ferner betrifft die Anmeldung den Aufbau der elektronischen Schaltung und ein Verfahren zur Verschlüsselung der Daten.

In der zunehmend digitalisierten und vernetzten Welt stellt die gezielte Nutzung von modernen Informations- und Kommunikationstechnologien den entscheidenden Schlüssel zum wirtschaftlichen Erfolg dar. Rasant wachsende Datenmengen (2018: 1,6 Zettabyte (1,6·10²¹ Byte) [1]) müssen für eine sichere Dateninfrastruktur verschlüsselt werden.

Digitale, auch software-basierte Verschlüsselungstechnologien genannte, Datenverschlüsselungen, bieten eine gute Möglichkeit, Daten zu schützen. Die Software-basierte Verschlüsselung ist bisher die Standardlösung zur Datenverschlüsselung. Derzeit können mit Hilfe von Softwareprogrammen einzelne Dateien oder Ordner oder gleich die gesamte Festplatte (im Rahmen einer Vollverschlüsslung; englisch: Full Disk Encryption) verschlüsselt werden. Dafür ist bereits eine Vielzahl von Softwarelösungen verschiedener Anbieter am Markt verfügbar. Nachteile einer software-basierten Vollverschlüsselung sind jedoch ein beträchtlicher Zeit- und Rechenaufwand und der damit verbundene erhöhte Energieverbrauch. Eine software-basierte Methode ist bei den erwartungsgemäß rasant wachsenden Datenmengen, die verarbeitet werden müssen, in Zukunft nicht mehr praktikabel.

Hardware-basierte Verschlüsselung löst Probleme der software-basierten Verschlüsselung und ermöglicht den Einsatz neuartiger Verschlüsselungskonzepte und Protokolle.

Bei der hardware-basierten Kryptographie werden durch die Hardwarekomponenten (Verschlüsselungshardware) die Daten oder ausgetauschten Signale ohne den Einsatz von zusätzlicher Software direkt auf dem Datenträger in Echtzeit verschlüsselt und so vor unerwünschten Einblicken geschützt. Geht das Speichermedium physisch verloren, sind die gespeicherten Daten trotzdem sicher. Im Echtzeitbetrieb sind durch die Nutzung von Hardwarekryptographie zudem größere Schlüssellängen als bisher möglich. Hardwareverschlüsselung bietet also erhebliche Sicherheitsvorteile und reduziert zugleich die Systembelastung, da keine Rechenleistung des Prozessors für die Verschlüsselung aufgewendet werden muss.

Eine bekannte Lösung zum Ablegen von Schlüsseln für kryptographische Anwendungen ist die sogenannte physical unclonable function (deutsch: physikalisch unklonbare Funktion; Abkürzung: PUF).

Wie ein Fingerabdruck ist die PUF ein individuelles Merkmal, welches an ein physikalisches Objekt (Verschlüsselungshardware) gebunden ist. Heutzutage werden PUFs zum Identifizieren von Bauteilen integrierter Schaltungen oder als Ersatz für das Speichern von Schlüsseln für kryptographische Anwendungen eingesetzt. Die Herausforderung beim Realisieren einer PUF ist es, ein physikalisches Objekt (Verschlüsselungshardware) zu finden, welches ein unvorhersagbares, individuelles Merkmal aufweist.

Aufgrund des stochastischen Verhaltens von Memristoren, sind Memristoren ideale potentielle Kandidaten zur Realisierung einer Verschlüsselungshardware. Memristoren sind neuartige mikroelektronische Bauelemente, deren elektrischer Widerstand in Abhängigkeit vom Stromfluss gezielt eingestellt werden kann und dann ohne anliegende äußere Spannung nichtflüchtig erhalten bleibt - daher das Kunstwort aus Memory (Gedächtnis) und Resistor (Widerstand). Es wird erwartet, dass Memristoren aufgrund ihres nichtflüchtigen Verhaltens nicht anfällig gegenüber Rauschen und Umwelteinflüssen sind. Gleichzeitig hängen die individuellen Merkmale von Memristoren jedoch stark und unkontrollierbar vom Herstellungsprozess ab und sind damit unvorhersagbar.

Memristoren wurden beispielsweise in [6] beschrieben.

Für PUFs in verschiedenen Anwendungen wurden bereits verschiedene Protokolle entwickelt. So eröffnet die BiFeO₃ (BFO)-Plattform (BFO/ BiFeO₃ = Bismut-Eisenoxid) aufgrund der memristiven Eigenschaften von BFO die Möglichkeit zur Nutzung der BFO-Plattform als PUF in der hardware-basierten Kryptographie. Beispielsweise beschreibt ein Protokoll, wie die nichtflüchtige, nichtlineare Widerstandsänderung von BFO-Memristoren für die Erzeugung von höheren Harmonischen, mit deren Hilfe man digitale Datensätze auf einfache Art chiffrieren und dechiffrieren kann [2], [3], verwendet werden wird. Diese höheren Harmonischen können drahtlos (englisch: wireless) an den Empfänger übertragen werden und vom Empfänger wieder mit einer hardware-basierten Kryptographie dekodiert werden. Die Minimierung der Autokorrelation dieser höheren Harmonischen wurde grundsätzlich mittels einer BFO-basierten Kryptographie gezeigt [3].

Der übertragene Datensatz kann nur dekodiert werden, wenn der identische BFO-Memristor und der identische Zufallszahlgenerator sowie die identische Kryptographie-Schaltung zur Verfügung steht, welche der Sender zum Verschlüsseln der Daten verwendet hat. Es wurde darüberhinaus gezeigt, wie der BFO-basierte Memristor zum Schutz personenbezogener Daten in der Medizin [4] verwendet werden kann.

Die Eigenschaft des Protokolls, dass der übertragene Datensatz nur dekodiert wird, wenn der identische BFO-Memristor und der identische Zufallszahlgenerator sowie die identische Kryptographie-Schaltung zur Verfügung steht, welche der Sender zum Verschlüsseln der Daten verwendet hat, stellt eine Sicherheitslücke dar. Diese Sicherheitslücke konnte bisher nicht geschlossen werden.

Im Jahr 2014 wurde ein BiFeO3-Memristor mit zwei rekonfigurierbaren Barrieren realisiert [5], [2] und es wurde ein Verfahren zum Realisieren einer rekonfigurierbaren Logik auf der Basis eines BiFeO3-Memristors mit zwei rekonfigurierbaren Barrieren gezeigt [5], [2].

US 2015/0358151 A1 offenbart einen komplementärer Widerstandsschalter, der zwei äußere Anschlüsse aufweist, zwischen denen sich zwei piezo- oder ferroelektrische Schichten mit einem inneren Anschluss befinden. Mindestens ein Bereich der Schichten ist modifiziert. Ebenfalls offenbart sind eine verbindbare Widerstandsstruktur mit mindestens einem Schottky-Kontakt an zwei benachbarten piezo- oder ferroelektrischen Schichten, eine polykristalline piezo- oder ferroelektrische Schicht mit modifizierten Kristalliten sowie ein Verfahren und Schaltungen zum Verschlüsseln und Entschlüsseln einer Bitsequenz.

Des Weiteren wird die Integration des komplementären Widerstandsschalters an den Kreuzungspunkten einer Gitterstruktur als Logiktor in einem Logikschaltkreis beschrieben.

Aufgabe der Erfindung ist es also, Konzepte zur verbesserten Verschlüsselung bereitzustellen.

Die Aufgabe wird erfindungsgemäß gelöst durch einen Enkodierer nach Anspruch 1, durch einen Dekodierer nach Anspruch 12, durch ein System nach Anspruch 25, durch ein Verfahren nach Anspruch 27, durch ein Verfahren nach Anspruch 28 und durch ein Computerprogramm nach Anspruch 29.

Ein Enkodierer zur Enkodierung eines Eingangs-Binärwerts einer binären Eingangs-Datensequenz durch Erzeugung eines Ausgangsstroms eines Ausgangs-Stromsignals wird bereitgestellt. Der Enkodierer umfasst ein Steuermodul und ein schaltbares Widerstandselement. Das schaltbare Widerstandselement ist ausgebildet, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden. Das Steuermodul ist ausgebildet, zu dem ersten Zeitpunkt die erste Eingangsspannung an das schaltbare Widerstandselement anzulegen, so dass die erste Eingangsspannung von dem besagten Eingangs-Binärwert abhängt. Des Weiteren ist das Steuermodul ausgebildet, zu dem zweiten Zeitpunkt die zweite Eingangsspannung an das schaltbare Widerstandselement anzulegen, so dass die zweite Eingangsspannung von einem Pseudozufalls-Binärwert einer Mehrzahl von Pseudozufalls-Binärwerten einer ersten binären Pseudozufalls-Datensequenz abhängt. Ferner ist das Steuermodul ausgebildet, zu einem dritten Zeitpunkt nach dem zweiten Zeitpunkt, eine dritte Eingangsspannung an das schaltbare Widerstandselement anzulegen, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt. Das schaltbare Widerstandselement ist ausgebildet, auf das Anlegen der dritten Eingangsspannung zu dem dritten Zeitpunkt hin, den besagten Ausgangsstrom auszugeben, so dass der besagte Ausgangsstrom von der dritten Eingangsspannung abhängig ist und davon abhängig ist, ob sich das schaltbare Widerstandselement in dem ersten Zustand oder in dem zweiten Zustand befindet.

Ferner wird ein Dekodierer zur Dekodierung eines Eingangsstroms eines Eingangs-Stromsignals durch Ausgabe eines Ausgangs-Binärwerts einer binären Ausgangs-Datensequenz bereitgestellt. Der Dekodierer umfasst ein Steuermodul ein schaltbares Widerstandselement und einen Komparator. Das schaltbare Widerstandselement ist ausgebildet, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden. Das Steuermodul ist ausgebildet, zu dem ersten Zeitpunkt die erste Eingangsspannung an das schaltbare Widerstandselement anzulegen, so dass die erste Eingangsspannung von einem Probe-Binärwert einer Mehrzahl von Probe-Binärwerten abhängt. Ferner ist das Steuermodul ausgebildet, zu dem zweiten Zeitpunkt die zweite Eingangsspannung an das schaltbare Widerstandselement anzulegen, so dass die zweite Eingangsspannung von einem Pseudozufalls-Binärwert einer Mehrzahl von Pseudozufalls-Binärwerten einer ersten binären Pseudozufalls-Datensequenz abhängt. Des Weiteren ist das Steuermodul ausgebildet, zu einem dritten Zeitpunkt nach dem zweiten Zeitpunkt, eine dritte Eingangsspannung an das schaltbare Widerstandselement anzulegen, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt. Das schaltbare Widerstandselement ist ausgebildet, auf das Anlegen der dritten Eingangsspannung zu dem dritten Zeitpunkt hin, dem Komparator einen Ausgangsstrom bereitzustellen, so dass der besagte Ausgangsstrom von der dritten Eingangsspannung abhängig ist und davon abhängig ist, ob sich das schaltbare Widerstandselement in dem ersten Zustand oder in dem zweiten Zustand befindet. Der Komparator ist ausgebildet, einen Vergleich zwischen dem besagten Ausgangsstrom und dem besagten Eingangsstrom durchzuführen, wobei der Komparator ausgebildet ist, abhängig von dem Vergleich und von dem besagten Probe-Binärwert den besagten Ausgangs-Binärwert zu bestimmen, und wobei der Komparator ausgebildet ist, den besagten Ausgangs-Binärwert auszugeben.

Des Weiteren wird ein Verfahren zur Enkodierung eines Eingangs-Binärwerts einer binären Eingangs-Datensequenz durch Erzeugung eines Ausgangsstroms eines Ausgangs-Stromsignals bereitgestellt. Ein schaltbares Widerstandselement ist ausgebildet, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden. Das Verfahren umfasst:
- Anlegen der ersten Eingangsspannung an das schaltbare Widerstandselement zu dem ersten Zeitpunkt, so dass die erste Eingangsspannung von dem besagten Eingangs-Binärwert abhängt.
- Anlegen der zweiten Eingangsspannung an das schaltbare Widerstandselement zu dem zweiten Zeitpunkt, so dass die zweite Eingangsspannung von einem Pseudozufalls-Binärwert einer Mehrzahl von Pseudozufalls-Binärwerten einer ersten binären Pseudozufalls-Datensequenz abhängt.
- Anlegen einer dritten Eingangsspannung an das schaltbare Widerstandselement zu einem dritten Zeitpunkt nach dem zweiten Zeitpunkt, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt. Und:
- Auf das Anlegen der dritten Eingangsspannung zu dem dritten Zeitpunkt hin, Ausgeben des besagten Ausgangsstroms durch das schaltbare Widerstandselement; so dass der besagte Ausgangsstrom von der dritten Eingangsspannung abhängig ist und davon abhängig ist, ob sich das schaltbare Widerstandselement in dem ersten Zustand oder in dem zweiten Zustand befindet.

Ferner wird ein Verfahren zur Dekodierung eines Eingangsstroms eines Eingangs-Stromsignals durch Ausgabe eines Ausgangs-Binärwerts einer binären Ausgangs-Datensequenz bereitgestellt. Ein schaltbares Widerstandselement ist ausgebildet, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden. Das Verfahren umfasst:
- Anlegen der ersten Eingangsspannung an das schaltbare Widerstandselement zu dem ersten Zeitpunkt, so dass die erste Eingangsspannung von einem Probe-Binärwert einer Mehrzahl von Probe-Binärwerten abhängt.
- Anlegen der zweiten Eingangsspannung an das schaltbare Widerstandselement zu dem zweiten Zeitpunkt, so dass die zweite Eingangsspannung von einem Pseudozufalls-Binärwert einer Mehrzahl von Pseudozufalls-Binärwerten einer ersten binären Pseudozufalls-Datensequenz abhängt.
- Anlegen einer dritten Eingangsspannung an das schaltbare Widerstandselement zu einem dritten Zeitpunkt nach dem zweiten Zeitpunkt, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt.
- Auf das Anlegen der dritten Eingangsspannung zu dem dritten Zeitpunkt hin, Bereitstellen eines Ausgangsstroms durch das schaltbare Widerstandselement; so dass der besagte Ausgangsstrom von der dritten Eingangsspannung abhängig ist und davon abhängig ist, ob sich das schaltbare Widerstandselement in dem ersten Zustand oder in dem zweiten Zustand befindet. Und
- Durchführen eines Vergleichs zwischen dem besagten Ausgangsstrom und dem besagten Eingangsstrom, Bestimmen des besagten Ausgangs-Binärwerts abhängig von dem Vergleich und von dem besagten Probe-Binärwert, und Ausgeben des besagten Ausgangs-Binärwerts.

Ferner werden Computerprogramme jeweils mit einem Programmcode zur Durchführung eines der oben beschriebenen Verfahren bereitgestellt.

Bevorzugte Ausführungsformen finden sich in den abhängigen Ansprüchen.

Nachfolgend werden bevorzugte Ausführungsformen der Erfindung unter Bezugnahme auf die Zeichnungen beschrieben.

In den Zeichnungen ist dargestellt:
- Fig. 1: zeigt einen Enkodierer zur Enkodierung eines Eingangs-Binärwerts einer binären Eingangs-Datensequenz durch Erzeugung eines Ausgangsstroms eines Ausgangs-Stromsignals gemäß einer Ausführungsform.
- Fig. 2: zeigt einen Dekodierer zur Dekodierung eines Eingangsstroms eines Eingangs-Stromsignals durch Ausgabe eines Ausgangs-Binärwerts einer binären Ausgangs-Datensequenz gemäß einer Ausführungsform.
- Fig. 3: zeigt ein System gemäß einer Ausführungsform.
- Fig. 4: zeigt einen Lesestrom I eines komplementären Widerstandes gemäß einer Ausführungsform.
- Fig. 5: zeigt schematisch ein Blockschaltbild für die Verschlüsselung und für die Entschlüsselung binärer Daten unter Verwendung zweier Zufallszahlengeneratoren gemäß einer Ausführungsform.
- Fig. 6: illustriert, wie Binärdaten in jeweils drei Analogdaten unter Verwendung von drei verschiedenen Amplituden gemäß einer Ausführungsform verschlüsselt werden.
- Fig. 7: zeigt schematisch ein Blockschaltbild für die Verschlüsselung und für die Entschlüsselung binärer Daten unter Verwendung dreier Zufallszahlengeneratoren gemäß einer Ausführungsform.

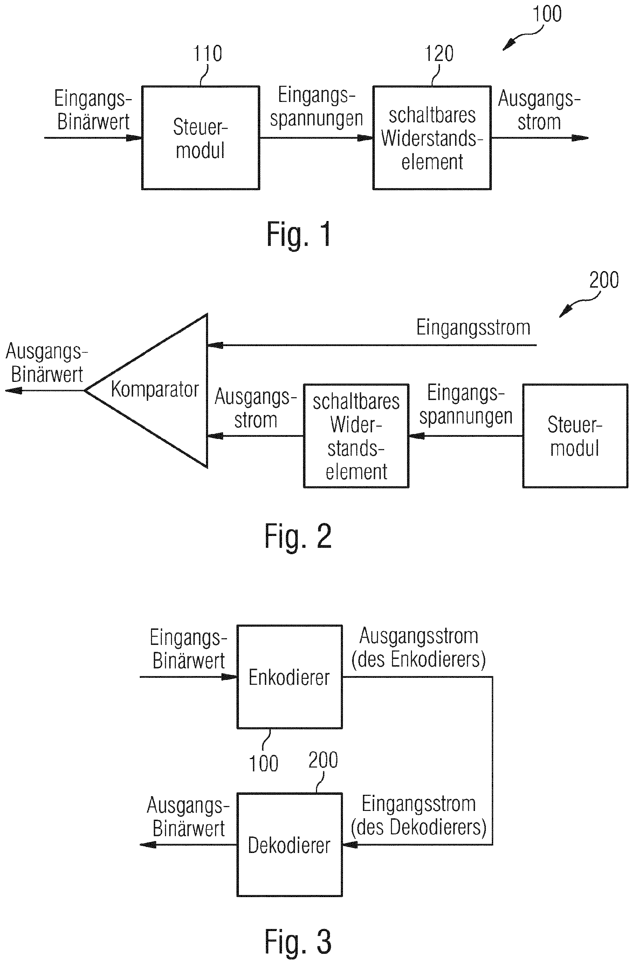

Fig. 1 zeigt einen Enkodierer 100 zur Enkodierung eines Eingangs-Binärwerts einer binären Eingangs-Datensequenz durch Erzeugung eines Ausgangsstroms eines Ausgangs-Stromsignals gemäß einer Ausführungsform. Der Enkodierer 100 umfasst ein Steuermodul 110 und ein schaltbares Widerstandselement 120.

Das schaltbare Widerstandselement 120 (auch als komplementärer Widerstandsschalter bezeichnet) ist ausgebildet, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden.

Das Steuermodul 110 ist ausgebildet, zu dem ersten Zeitpunkt die erste Eingangsspannung an das schaltbare Widerstandselement 120 anzulegen, so dass die erste Eingangsspannung von dem besagten Eingangs-Binärwert abhängt.

Des Weiteren ist das Steuermodul 110 ausgebildet, zu dem zweiten Zeitpunkt die zweite Eingangsspannung an das schaltbare Widerstandselement 120 anzulegen, so dass die zweite Eingangsspannung von einem Pseudozufalls-Binärwert einer Mehrzahl von Pseudozufalls-Binärwerten einer ersten binären Pseudozufalls-Datensequenz abhängt.

Ferner ist das Steuermodul 110 ausgebildet, zu einem dritten Zeitpunkt nach dem zweiten Zeitpunkt, eine dritte Eingangsspannung an das schaltbare Widerstandselement 120 anzulegen, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt.

Das schaltbare Widerstandselement 120 ist ausgebildet, auf das Anlegen der dritten Eingangsspannung zu dem dritten Zeitpunkt hin, den besagten Ausgangsstrom auszugeben, so dass der besagte Ausgangsstrom von der dritten Eingangsspannung abhängig ist und davon abhängig ist, ob sich das schaltbare Widerstandselement 120 in dem ersten Zustand oder in dem zweiten Zustand befindet.

Gemäß einer Ausführungsform kann das schaltbare Widerstandselement 120 z.B. ausgebildet sein, auf das Anlegen der dritten Eingangsspannung zu dem dritten Zeitpunkt hin, den besagten Ausgangsstrom auszugeben,
- so dass der besagte Ausgangsstrom einen ersten Ausgangsstromwert aufweist, wenn die dritte Eingangsspannung einen ersten Eingangsspannungswert aufweist und sich das schaltbare Widerstandselement 120 in dem ersten Zustand befindet,
- so dass der besagte Ausgangsstrom einen zweiten Ausgangsstromwert aufweist, der größer als der erste Ausgangsstromwert ist, wenn die dritte Eingangsspannung einen zweiten Eingangsspannungswert aufweist und sich das schaltbare Widerstandselement 120 in dem ersten Zustand befindet,
- so dass der besagte Ausgangsstrom einen dritten Ausgangsstromwert aufweist, wenn die dritte Eingangsspannung den ersten Eingangsspannungswert aufweist und sich das schaltbare Widerstandselement 120 in dem zweiten Zustand befindet, und
- so dass der besagte Ausgangsstrom einen vierten Ausgangsstromwert aufweist, der kleiner als der dritte Ausgangsstromwert ist, wenn die dritte Eingangsspannung den zweiten Eingangsspannungswert aufweist und sich das schaltbare Widerstandselement 120 in dem zweiten Zustand befindet.

Dabei können der erste Ausgangsstromwert und der vierte Ausgangsstromwert z.B. gleich oder verscheiden sein, und der zweite Ausgangsstromwert und der dritte Ausgangsstromwert können z.B. gleich oder verscheiden sein.

In einer Ausführungsform kann das schaltbare Widerstandselement 120 z.B. ein Memristor sein.

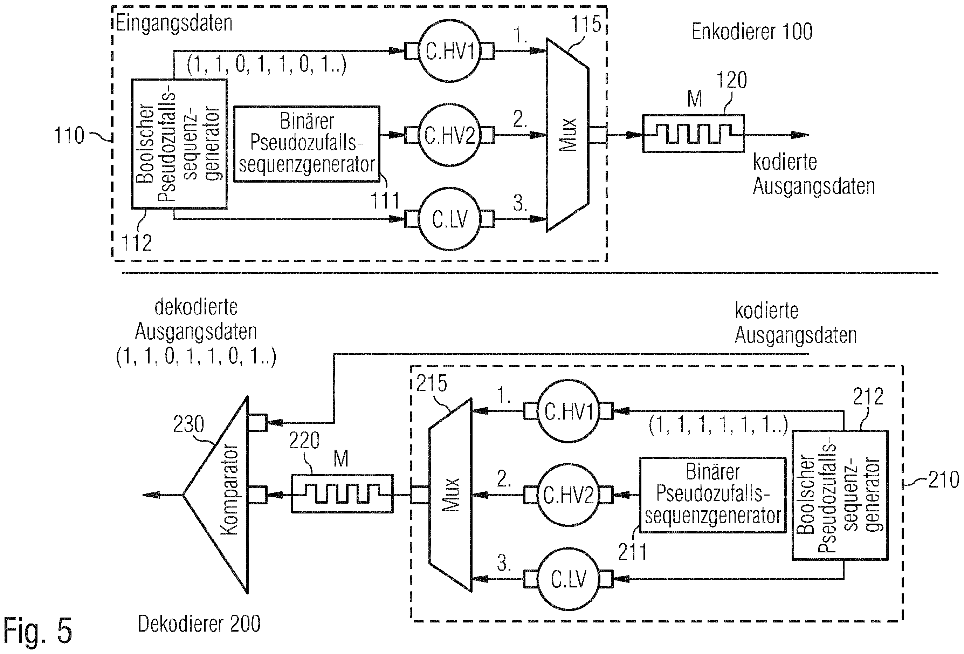

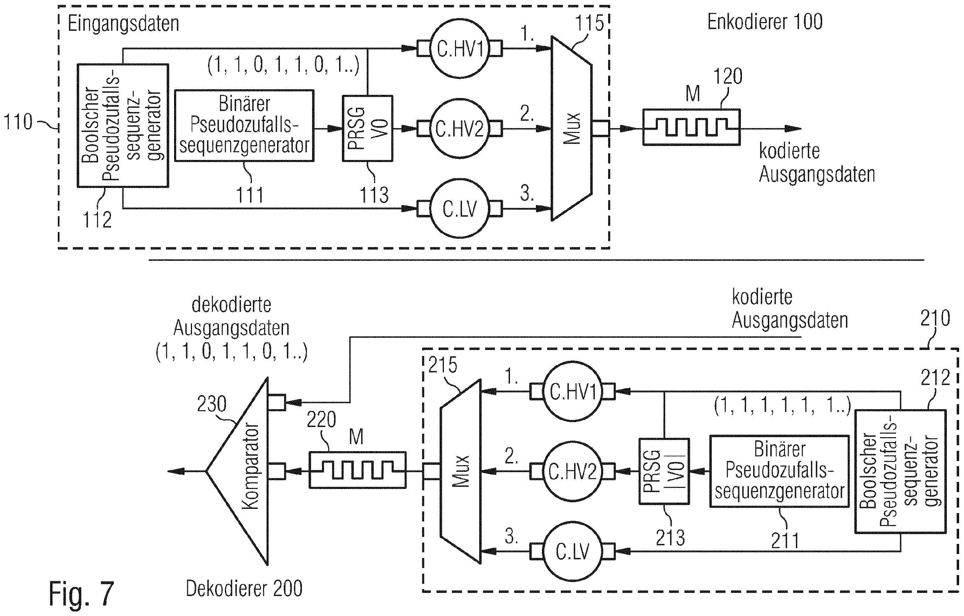

Gemäß einer Ausführungsform kann das Steuermodul 110 z.B. einen ersten Pseudozufallsgenerator 111 umfassen, der z.B. ausgebildet sein kann, die erste Pseudo-Zufallsgeneratorsequenz zu erzeugen. Oder, das Steuermodul 110 kann z.B. den ersten Pseudozufallsgenerator 111 umfassen, der z.B. ausgebildet sein kann, die erste Pseudo-Zufallsgeneratorsequenz zu erzeugen, und wobei das Steuermodul 110 z.B. einen zweiten Pseudozufallsgenerator 112 umfassen kann, der z.B. ausgebildet sein kann, die zweite Pseudo-Zufallsgeneratorsequenz zu erzeugen (siehe Fig. 5 und Fig. 7).

In einer Ausführungsform kann das Steuermodul 110 z.B. ausgebildet sein, den besagten Eingangs-Binärwert mit dem besagten Pseudozufalls-Binärwert der Mehrzahl von Pseudozufalls-Binärwerten der zweiten binären Pseudozufalls-Datensequenz durch eine Boolesche Operation zu verknüpfen, um einen Kombinations-Binärwert zu erhalten. Dabei kann das Steuermodul 110 z.B. ausgebildet sein, zu dem ersten Zeitpunkt die erste Eingangsspannung an das schaltbare Widerstandselement 120 anzulegen, so dass die erste Eingangsspannung von dem Kombinations-Binärwert abhängt. Ferner kann das Steuermodul 110 z.B. ausgebildet sein, zu dem dritten Zeitpunkt die dritte Eingangsspannung an das schaltbare Widerstandselement 120 anzulegen, so dass die dritte Eingangsspannung von dem besagten Pseudozufalls-Binärwert der Mehrzahl von Pseudozufalls-Binärwerten der zweiten binären Pseudozufalls-Datensequenz abhängt.

Gemäß einer Ausführungsform kann die Boolesche Operation z.B. eine XOR-Operation oder z.B. eine XNOR Operation sein.

In einer Ausführungsform kann das Steuermodul 110 z.B. ausgebildet sein, zu dem dritten Zeitpunkt die dritte Eingangsspannung an das schaltbare Widerstandselement 120 anzulegen, so dass die dritte Eingangsspannung nicht von dem besagten Eingangs-Binärwert abhängt.

Gemäß einer Ausführungsform kann das Steuermodul 110 z.B. ausgebildet sein, die erste Eingangsspannung an das schaltbare Widerstandselement 120 anzulegen, so dass die erste Eingangsspannung abhängig von dem besagten Eingangs-Binärwert entweder positiv ist oder negativ ist. Dabei kann das Steuermodul 110 z.B. ausgebildet sein, die zweite Eingangsspannung an das schaltbare Widerstandselement 120 anzulegen, so dass die zweite Eingangsspannung abhängig von dem besagten Pseudozufalls-Binärwert der Mehrzahl von Pseudozufalls-Binärwerten der ersten binären Pseudozufalls-Datensequenz entweder positiv ist oder negativ ist. Ferner kann das Steuermodul 110 z.B. ausgebildet sein, die dritte Eingangsspannung an das schaltbare Widerstandselement 120 anzulegen, so dass die dritte Eingangsspannung abhängig von dem besagten Pseudozufalls-Binärwert der Mehrzahl von Pseudozufalls-Binärwerten der ersten binären Pseudozufalls-Datensequenz oder abhängig von dem besagten Pseudozufalls-Binärwert der Mehrzahl von Pseudozufalls-Binärwerten der zweiten binären Pseudozufalls-Datensequenz entweder positiv ist oder negativ ist.

In einer Ausführungsform kann das Steuermodul 110 z.B. ausgebildet sein, eine Amplitude der ersten Eingangsspannung und/oder der zweiten Eingangsspannung abhängig von einem Pseudo-Zufallswert einer dritten Pseudozufalls-Datensequenz zu bestimmen.

Gemäß einer Ausführungsform kann das Steuermodul 110 z.B. ausgebildet sein, für die Amplitude der ersten Eingangsspannung und/oder der zweiten Eingangsspannung einen von drei oder mehreren verschiedenen Amplitudenwerten abhängig von dem besagten Pseudo-Zufallswert der dritten Pseudozufalls-Datensequenz zu bestimmen

In einer Ausführungsform kann das Steuermodul 110 z.B. einen dritten Pseudozufallsgenerator 113 umfassen, der z.B. ausgebildet sein kann, die dritte Pseudo-Zufallsgeneratorsequenz zu erzeugen, so dass jeder Pseudo-Zufallswert der dritten Pseudozufalls-Datensequenz einen von drei oder mehr verschiedenen Zahlenwerten annimmt.

Erfindungsgemäß weist das Steuermodul 110 z.B. einen Multiplexer 115 und Leitungen auf, wobei der Multiplexer 115 z.B. ausgebildet ist, die Leitungen zu verbinden. Dabei ist das Steuermodul 110 ausgebildet, die erste Eingangsspannung, die zweite Eingangsspannung und die dritte Eingangsspannung über die Leitungen und über den Multiplexer 115 an das schaltbare Widerstandselement 120 anzulegen (siehe Fig. 5 und Fig. 7).

Fig. 2 zeigt einen Dekodierer 200 zur Dekodierung eines Eingangsstroms eines Eingangs-Stromsignals durch Ausgabe eines Ausgangs-Binärwerts einer binären Ausgangs-Datensequenz gemäß einer Ausführungsform. Der Dekodierer 200 umfasst ein Steuermodul 210 ein schaltbares Widerstandselement 220 und einen Komparator 230.

Das schaltbare Widerstandselement 220 (auch als komplementärer Widerstandsschalter bezeichnet) ist ausgebildet, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden.

Das Steuermodul 210 ist ausgebildet, zu dem ersten Zeitpunkt die erste Eingangsspannung an das schaltbare Widerstandselement 220 anzulegen, so dass die erste Eingangsspannung von einem Probe-Binärwert einer Mehrzahl von Probe-Binärwerten abhängt.

Ferner ist das Steuermodul 210 ausgebildet, zu dem zweiten Zeitpunkt die zweite Eingangsspannung an das schaltbare Widerstandselement 220 anzulegen, so dass die zweite Eingangsspannung von einem Pseudozufalls-Binärwert einer Mehrzahl von Pseudozufalls-Binärwerten einer ersten binären Pseudozufalls-Datensequenz abhängt.

Des Weiteren ist das Steuermodul 210 ausgebildet, zu einem dritten Zeitpunkt nach dem zweiten Zeitpunkt, eine dritte Eingangsspannung an das schaltbare Widerstandselement 220 anzulegen, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt.

Das schaltbare Widerstandselement 220 ist ausgebildet, auf das Anlegen der dritten Eingangsspannung zu dem dritten Zeitpunkt hin, dem Komparator 230 einen Ausgangsstrom bereitzustellen, so dass der besagte Ausgangsstrom von der dritten Eingangsspannung abhängig ist und davon abhängig ist, ob sich das schaltbare Widerstandselement 220 in dem ersten Zustand oder in dem zweiten Zustand befindet.

Der Komparator 230 ist ausgebildet, einen Vergleich zwischen dem besagten Ausgangsstrom und dem besagten Eingangsstrom durchzuführen, wobei der Komparator 230 ausgebildet ist, abhängig von dem Vergleich und von dem besagten Probe-Binärwert den besagten Ausgangs-Binärwert zu bestimmen, und wobei der Komparator 230 ausgebildet ist, den besagten Ausgangs-Binärwert auszugeben.

Gemäß einer Ausführungsform kann der Komparator 230 z.B. ausgebildet sein, als den besagten Ausgangs-Binärwert den besagten Probe-Binärwert zu bestimmen und auszugeben, wenn ein Betrag einer Differenz zwischen dem Ausgangsstrom und dem besagten Eingangsstrom kleiner als ein Grenzwert ist. Dabei kann der Komparator 230 z.B. ausgebildet sein, als den besagten Ausgangs-Binärwert einen invertierten Binärwert des besagten Probe-Binärwerts zu bestimmen und auszugeben, wenn ein Betrag einer Differenz zwischen dem Ausgangsstrom und dem besagten Eingangsstrom größer oder gleich dem Grenzwert ist.

Gemäß einer Ausführungsform kann das schaltbare Widerstandselement 220 z.B. ausgebildet sein, auf das Anlegen der dritten Eingangsspannung zu dem dritten Zeitpunkt hin, dem Komparator 230 den besagten Ausgangsstrom bereitzustellen,
- so dass der besagte Ausgangsstrom einen ersten Ausgangsstromwert aufweist, wenn die dritte Eingangsspannung einen ersten Eingangsspannungswert aufweist und sich das schaltbare Widerstandselement 220 in dem ersten Zustand befindet,
- so dass der besagte Ausgangsstrom einen zweiten Ausgangsstromwert aufweist, der größer als der erste Ausgangsstromwert ist, wenn die dritte Eingangsspannung einen zweiten Eingangsspannungswert aufweist und sich das schaltbare Widerstandselement 220 in dem ersten Zustand befindet,
- so dass der besagte Ausgangsstrom einen dritten Ausgangsstromwert aufweist, wenn die dritte Eingangsspannung den ersten Eingangsspannungswert aufweist und sich das schaltbare Widerstandselement 220 in dem zweiten Zustand befindet, und
- so dass der besagte Ausgangsstrom einen vierten Ausgangsstromwert aufweist, der kleiner als der dritte Ausgangsstromwert ist, wenn die dritte Eingangsspannung den zweiten Eingangsspannungswert aufweist und sich das schaltbare Widerstandselement 220 in dem zweiten Zustand befindet.

Dabei können der erste Ausgangsstromwert und der vierte Ausgangsstromwert z.B. gleich oder verscheiden sein, und der zweite Ausgangsstromwert und der dritte Ausgangsstromwert können z.B. gleich oder verscheiden sein.

In einer Ausführungsform kann das schaltbare Widerstandselement 220 z.B. ein Memristor sein.

Gemäß einer Ausführungsform kann das Steuermodul 210 z.B. einen ersten Pseudozufallsgenerator 211 umfassen, der z.B. ausgebildet sein kann, die erste Pseudo-Zufallsgeneratorsequenz zu erzeugen. Oder, das Steuermodul 210 kann z.B. den ersten Pseudozufallsgenerator 211 umfassen, der z.B. ausgebildet sein kann, die erste Pseudo-Zufallsgeneratorsequenz zu erzeugen, und wobei das Steuermodul 210 z.B. einen zweiten Pseudozufallsgenerator 212 umfassen kann, der z.B. ausgebildet sein kann, die zweite Pseudo-Zufallsgeneratorsequenz zu erzeugen (siehe Fig. 5 und Fig. 7).

In einer Ausführungsform kann das Steuermodul 210 z.B. ausgebildet sein, den besagten Eingangs-Binärwert mit dem besagten Pseudozufalls-Binärwert der Mehrzahl von Pseudozufalls-Binärwerten der zweiten binären Pseudozufalls-Datensequenz durch eine Boolesche Operation zu verknüpfen, um einen Kombinations-Binärwert zu erhalten. Dabei kann das Steuermodul 210 z.B. ausgebildet sein, zu dem ersten Zeitpunkt die erste Eingangsspannung an das schaltbare Widerstandselement 220 anzulegen, so dass die erste Eingangsspannung von dem Kombinations-Binärwert abhängt. Ferner kann das Steuermodul 210 z.B. ausgebildet sein, zu dem dritten Zeitpunkt die dritte Eingangsspannung an das schaltbare Widerstandselement 220 anzulegen, so dass die dritte Eingangsspannung von dem besagten Pseudozufalls-Binärwert der Mehrzahl von Pseudozufalls-Binärwerten der zweiten binären Pseudozufalls-Datensequenz abhängt.

Gemäß einer Ausführungsform kann die Boolesche Operation z.B. eine XOR-Operation oder z.B. eine XNOR Operation sein.

In einer Ausführungsform kann das Steuermodul 210 z.B. ausgebildet sein, zu dem dritten Zeitpunkt die dritte Eingangsspannung an das schaltbare Widerstandselement 220 anzulegen, so dass die dritte Eingangsspannung nicht von dem besagten Eingangs-Binärwert abhängt.

Gemäß einer Ausführungsform kann das Steuermodul 210 z.B. ausgebildet sein, die erste Eingangsspannung an das schaltbare Widerstandselement 220 anzulegen, so dass die erste Eingangsspannung abhängig von dem besagten Eingangs-Binärwert entweder positiv ist oder negativ ist. Dabei kann das Steuermodul 210 z.B. ausgebildet sein, die zweite Eingangsspannung an das schaltbare Widerstandselement 220 anzulegen, so dass die zweite Eingangsspannung abhängig von dem besagten Pseudozufalls-Binärwert der Mehrzahl von Pseudozufalls-Binärwerten der ersten binären Pseudozufalls-Datensequenz entweder positiv ist oder negativ ist. Ferner kann das Steuermodul 210 z.B. ausgebildet sein, die dritte Eingangsspannung an das schaltbare Widerstandselement 220 anzulegen, so dass die dritte Eingangsspannung abhängig von dem besagten Pseudozufalls-Binärwert der Mehrzahl von Pseudozufalls-Binärwerten der ersten binären Pseudozufalls-Datensequenz oder abhängig von dem besagten Pseudozufalls-Binärwert der Mehrzahl von Pseudozufalls-Binärwerten der zweiten binären Pseudozufalls-Datensequenz entweder positiv ist oder negativ ist.

In einer Ausführungsform kann das Steuermodul 210 z.B. ausgebildet sein, eine Amplitude der ersten Eingangsspannung und/oder der zweiten Eingangsspannung abhängig von einem Pseudo-Zufallswert einer dritten Pseudozufalls-Datensequenz zu bestimmen. Gemäß einer Ausführungsform kann das Steuermodul 210 z.B. ausgebildet sein, für die Amplitude der ersten Eingangsspannung und/oder der zweiten Eingangsspannung einen von drei oder mehreren verschiedenen Amplitudenwerten abhängig von dem besagten Pseudo-Zufallswert der dritten Pseudozufalls-Datensequenz zu bestimmen

In einer Ausführungsform kann das Steuermodul 210 z.B. einen dritten Pseudozufallsgenerator 213 umfassen, der z.B. ausgebildet sein kann, die dritte Pseudo-Zufallsgeneratorsequenz zu erzeugen, so dass jeder Pseudo-Zufallswert der dritten Pseudozufalls-Datensequenz einen von drei oder mehr verschiedenen Zahlenwerten annimmt.

Erfindungsgemäß weist das Steuermodul 210 z.B. einen Multiplexer 215 und Leitungen auf, wobei der Multiplexer 215 z.B. ausgebildet ist, die Leitungen zu verbinden, Dabei ist das Steuermodul 210 ausgebildet, die erste Eingangsspannung, die zweite Eingangsspannung und die dritte Eingangsspannung über die Leitungen und über den Multiplexer 215 an das schaltbare Widerstandselement 220 anzulegen (siehe Fig. 5 und Fig. 7).

Fig. 3 zeigt ein System, umfassend einen Enkodierer 100 nach einem der oben beschriebenen Ausführungsbeispiele zur Enkodierung eines Eingangs-Binärwerts einer binären Eingangs-Datensequenz durch Erzeugung eines Ausgangsstroms eines Ausgangs-Stromsignals, und einen Dekodierer 200 nach einem der oben beschriebenen Ausführungsbeispiele zur Dekodierung eines Eingangsstroms eines Eingangs-Stromsignals durch Ausgabe eines Ausgangs-Binärwerts einer binären Ausgangs-Datensequenz.

Der Dekodierer 200 ist ausgebildet, den vom Enkodierer 100 als Eingangsstrom zu verwenden und zu dekodieren.

In einer Ausführungsform können die erste binäre Pseudozufalls-Datensequenz des Enkodierers 100 und die erste binäre Pseudozufalls-Datensequenz des Dekodierers 200 z.B. gleich sein. Dabei können die zweite binäre Pseudozufalls-Datensequenz des Enkodierers 100 und die zweite binäre Pseudozufalls-Datensequenz des Dekodierers 200 z.B. gleich sein. Das schaltbare Widerstandselement 220 des Enkodierers 100 und das schaltbare Widerstandselement 220 des Dekodierers 200 können dabei z.B. ausgebildet sein, bei gleicher erster Eingangsspannung und bei gleicher zweiten Eingangsspannung sich beide entweder in dem ersten Zustand oder sich beide in dem zweiten Zustand zu befinden. Ferner können das schaltbare Widerstandselement 220 des Enkodierers 100 und das schaltbare Widerstandselement 220 des Dekodierers 200 z.B. ausgebildet sein, auf ein Anlegen der derselben dritten Eingangsspannung hin, einen gleichen Ausgangsstrom auszugeben oder bereitzustellen.

Ausführungsformen beschreiben ein Protokoll zur sicheren Datenübertragung mittels memristor-basierter PUF, bei dem ein Zufallsgenerator zur Datenverschlüsselung und ein anderer Zufallsgenerator zur Datenentschlüsselung verwendet wird.

Was Memristoren betrifft, wird explizit auf Dokument [6] verwiesen, insbesondere auf Dokument [6], Seite 44, Zeilen 17 - 30, Seite 49, Zeile 20 - Seite 50, Zeile 26, und Seite 50 , Zeile 33 - Seite 55, unten.

Damit wird eine bisher bestehende Sicherheitslücke bei der Datenübertragung geschlossen. Die in [2] und [5] beschriebene Hardware kann in Ausführungsformen zum Verschlüsseln binärer Daten und zum Speichern der verschlüsselten Daten z.B. verwendet werden. Entsprechend der in Ausführungsformen beschriebenen Konzepte speichert die Hardware beispielsweise die verschlüsselten Daten und vermittelt somit unmittelbaren Schutz gegen einen Angriff, da der Auslesemechanismus entsprechend den beschriebenen Konzepten durch einen Angreifer nicht vorhergesehen werden kann. Zum Auslesen der Daten müsste der Angreifer sowohl den Zufallsgenerator zur Datenverschlüsselung als auch den Zufallsgenerator zur Datenentschlüsselung kennen. Dies erschwert bzw. verhindert die Datenentschlüsselung für einen Angreifer.

Im allgemeinen hat ein Memristor einen stochastischen Schreibmechanismus und einen deterministischen Lesemechanismus. Ein Memristor mit zwei rekonfigurierbaren Barrieren, wird entsprechend des Verfahrens zum Speichern der Daten mit einem Zufallsgenerator zur Datenverschlüsselung **PRSG Boolean** 112; 212 der binären Inputdaten und einer mittels eines Zufallsgenerators erzeugten zufälligen Folge binärer Zahlen **PRSG Boolean** 111; 211 mittels zufällig gewählter Booleanscher Funktion verwendet. Die Folge der beiden Schreibpulse C.HV1 und C.HV2 definiert die nichtflüchtigen Zustands-Paare (LRSp, HRSn) und (LRSn, HRSp). Das zuletzt geschriebene, nichtflüchtig eingestellte Zustandspaar wird mit dem zufällig gewählten Lesepuls C.LV ausgelesen.

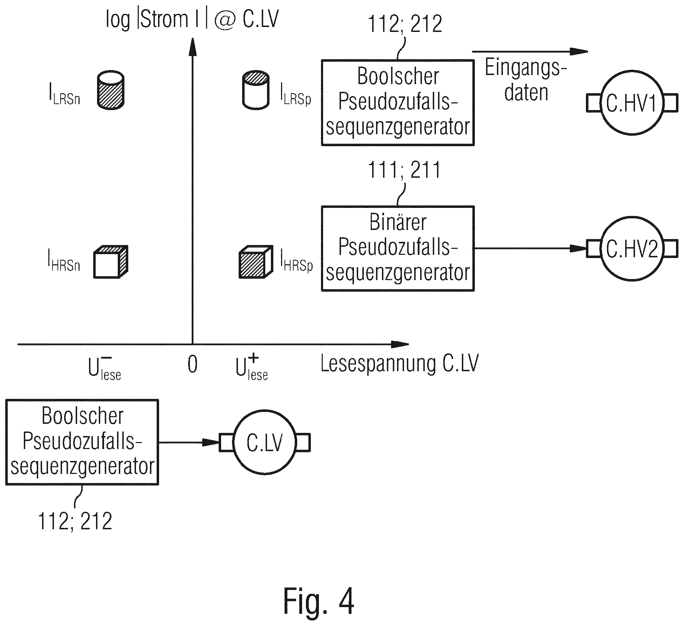

In einer Ausführungsform wird z.B. im "Level read"-Schema, nicht im "Spike read"-Schema, gelesen. Ein Vorteil besteht u.a. darin, dass speziell der Spannungsbereich für HRS nicht mV genau eingestellt werden muss (siehe Fig. 4).

Da das Verschlüsseln nichtflüchtig im komplementären Widerstandsschalter **M** erfolgt, können die binären Inputdaten sequentiell verschlüsselt werden. Das Auslesen der verschlüsselten Daten erfolgt mit dem Zufallsgenerator **PRSG Boolean** 112; 212, so dass zum Verschlüsseln und zum Auslesen dieselbe Boolesche Funktion verwendet wird.

Das bedeutet, dass mittels einer Memristors mit zwei rekonfigurierbaren Barrieren **M** die Daten stochastisch zusammen mit einer stochastisch gewählten binären Zahlenfolge sequentiell verschlüsselt und auch stochastisch entschlüsselt werden. Das Problem der stochastischen Entschlüsselung wird durch Verwendung eines bereits bekannten Memristors gelöst, dessen Widerstand sich mit zwei verschiedenen Polaritäten der Schreibspannung nichtflüchtig schreiben und dessen Widerstand sich mit zwei verschiedenen Polaritäten der Lesespannung auslesen lässt (Fig. 5).

Ein Memristor mit zwei rekonfigurierbaren Barrieren, wird entsprechend des Konzepts zum Speichern der Daten mit einem Zufallsgenerator zur Datenverschlüsselung **PRSG Boolean** 112; 212 der binären Inputdaten und einer mittels eines Zufallsgenerators erzeugten zufälligen Folge binärer Zahlen **PRSG Boolean** 111; 211 mittels der zufällig gewählten Booleanschen Funktion verwendet.

Optional kann die Sicherheit beispielsweise durch Verwendung eines dritten Zufallsgenerators **PRSG |V0|** 113; 213 zum Verschlüsseln der Schreibamplitude erhöht werden, so dass binäre Eingangsdaten auf analoge verschlüsselte Daten projiziert werden. Durch diese nicht eineindeutige Abbildung kann die Sicherheit bei der Datenverschlüsselung und bei der Datenentschlüsselung beispielsweise weiter erhöht werden.

Die Folge der beiden Schreibpulse C.HV1 und C.HV2 definiert die nichtflüchtigen Zustands-Paare (LRSp,HRSn), (LRSp',HRSn') und (LRSp",HRSn") sowie (LRSn, HRSp), (LRSn', HRSp'), und (LRSn",HRSp").

Die Amplitude V0 der beiden Schreibpulse C.HV1 und C.HV2 wird mittels des Zufallsgenerators **PRSG |V0|** 113; 213 zufällig gewählt und bestimmt welches der drei nichtflüchtigen Zustandspaare (LRSp, HRSn), (LRSp',HRSn') und (LRSp",HRSn") mit dem größten Unterschied im Lesestrom I geschrieben wird. Je größer die Amplitude V0 der Schreibpulse ist, desto größer ist der Unterschied im Lesestrom, s.a. die Leseströme zu den Zustandspaaren (LRSp",HRSn") und (LRSn", HRSp") . Bei der kleinsten Amplitude V0 der Schreibpulse ist der Unterschied im Lesestrom am kleinsten, s.a. die Leseströme zu den Zustandspaaren (LRSp,HRSn) und (LRSn,HRSp). Das eröffnet die Möglichkeit, binäre Inputdaten als Analogdaten zu verschlüsseln.

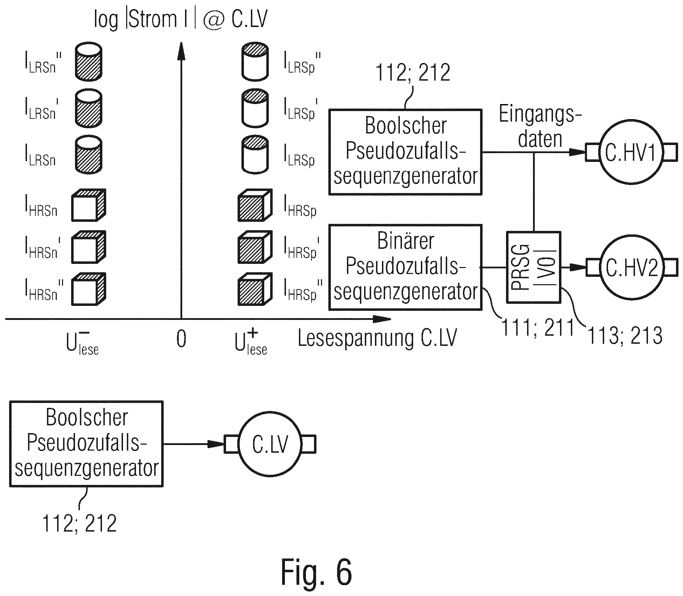

Fig. 6 illustriert, wie Binärdaten in jeweils drei Analogdaten unter Verwendung von drei verschieden Amplituden V0 gemäß einer Ausführungsform verschlüsselt werden.

Wie für den komplementären Widerstandsschalter **M** mit fester Amplitude V0 der Schreibpulse (Fig. 4) wird das zuletzt geschriebene, nichtflüchtig eingestellte Zustandspaar mit dem zufällig gewählten Lesepuls C.LV ausgelesen. In einer Ausführungsform wird z.B. im "Level read"-Schema, nicht im "Spike read"-Schema, gelesen.

Da das Verschlüsseln nichtflüchtig im komplementären Widerstandsschalter **M** mit zufällig gewählter Amplitude V0 der Schreibpulse erfolgt, können die binären Inputdaten sequentiell als analoge Daten verschlüsselt werden. Das Auslesen der verschlüsselten Daten erfolgt mit dem Zufallsgenerator **PRSG Boolean** 112; 212, so dass zum Verschlüsseln und zum Auslesen dieselbe Boolesche Funktion verwendet wird.

Das bedeutet, dass mittels einer Memristors mit zwei rekonfigurierbaren Barrieren **M** die Daten stochastisch zusammen mit einer stochastisch gewählten binären Zahlenfolge sequentiell verschlüsselt und auch stochastisch entschlüsselt werden. Das Problem der stochastischen Entschlüsselung wird durch Verwendung eines bereits bekannten Memristors **M** gelöst, dessen Widerstand sich mit zwei verschiedenen Polaritäten der Schreibspannung nichtflüchtig schreiben und dessen Widerstand sich mit zwei verschiedenen Polaritäten der Lesespannung auslesen lässt (Fig. 7).

Fig. 4 zeigt einen Lesestrom I eines komplementären Widerstandes (eines schaltbaren Widerstandselements 120; 220) gemäß einer Ausführungsform, in den mittels einer Schreibpulssequenz C.HV1 und C.HV2 auf einer logarithmischen Skale bei der Lesespannung C.LV. In Abhängigkeit von der Polarität der Lesespannung C.LV wird bei positiver Polarität der Lesespannung der Lesestrom I_{LRSp} zum Widerstandszustand LRSp im Zustandspaar (LRSp, HRSn) und der Lesestrom I_{HRSp} zum Widerstandszustand HRSp im Zustandspaar (LRSn, HRSp) ausgelesen, und es wird bei negativer Polarität der Lesespannung der Lesestrom I_{HRSn} zum Widerstandszustand HRSn im Zustandspaar (LRSp, HRSn) und der Lesestrom I_{LRSn} zum Widerstandszustand LRSn im Zustandspaar (LRSn,HRSp) ausgelesen.

Fig. 5 zeigt schematisch ein Blockschaltbild für die Verschlüsselung und für die Entschlüsselung binärer Daten unter Verwendung zweier Zufallszahlengeneratoren **PRSG Boolean** 112; 212 und **PRSG Boolean** 111; 211 gemäß einer Ausführungsform.

Fig. 6 zeigt den Lesestrom I eines komplementären Widerstandes, in den mittels einer Schreibpulssequenz C.HV1 und C.HV2 mit drei verschiedenen Amplituden V0 der Schreibpulse drei Zustandspaare [geschrieben wurden.

In Abhängigkeit von der Polarität der Lesespannung C.LV wird bei positiver Polarität der Lesespannung der Lesestrom I_{LRSp} / I_{LRSp}' / I_{LRSp}" zum Widerstandszustand LRSp / LRSp' / LRSp" im Zustandspaar (LRSp,HRSn) / (LRSp',HRSn') / (LRSp",HRSn") und der Lesestrom I_{HRSp} / I_{HRSp}' / I_{HRSp}" zum Widerstandszustand HRSp / HRSp' / HRSp" im Zustandspaar (LRSn,HRSp) / (LRSn',HRSp') / (LRSn",HRSp") ausgelesen und wird bei negativer Polarität der Lesespannung der Lesestrom I_{HRSn} / I_{HRSn}' / I_{HRSn}" zum Widerstandszustand HRSn / HRSn' / HRSn" im Zustandspaar (LRSp, HRSn) / (LRSp', HRSn') / (LRSp",HRSn") und der Lesestrom I_{LRSn} / I_{LRSn}' / I_{LRSn}" zum Widerstandszustand LRSn / LRSn' / LRSn" im Zustandspaar (LRSn,HRSp) / (LRSn',HRSp') / (LRSn",HRSp") ausgelesen.

Fig. 7 zeigt schematisch ein Blockschaltbild für die Verschlüsselung und für die Entschlüsselung binärer Daten unter Verwendung dreier Zufallszahlengeneratoren **PRSG Boolean** 112; 212, **PRSG Boolean** 111; 211 und **PRSG |V0|** 113; 213 gemäß einer Ausführungsform.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele, die nicht von der Erfindung gedeckt sind, umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel, das nicht von der Erfindung gedeckt ist, ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel, das nicht von der Erfindung gedeckt ist, ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres, das nicht von der Erfindung gedeckt ist, umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel, das nicht von der Erfindung gedeckt ist, umfasst einen Computer, auf dem das Computerprogramm zum Durchführen eines der hierin beschriebenen Verfahren installiert ist.

Ein weiteres Ausführungsbeispiel, das nicht von der Erfindung gedeckt ist, umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur:

[1] Cisco, The Zettabyte Era: Trends and Analysis, White Paper, (2014)
[2] US 9,812,640 B2, Complementary resistance switch, contact-connected polycrystalline piezo- or ferroelectric thin film layer, method for encrypting a bit sequence, T. You, H. Schmidt, N. Du, D. Bürger, I. Skorupa, N. Manjunath, 2017
[3] Nan Du et al., J. Appl. Phys. 115, 124501 (2014).
[4] A. Ascoli, V. Senger, R. Tetzlaff, N. Du, O. G. Schmidt, and H. Schmidt, "BiFeO3 memristor-based encryption of medical data", Int. Symp. Circ. and Syst. (ISCAS), 2016.
[5] T. You , Y. Shuai, W. Luo, N. Du, D. Bürger, I. Skorupa, R. Hübner, S. Henker, C. Mayr, R. Schüffny, T. Mikolajick, O.G. Schmidt, and H. Schmidt, Exploiting Memristive BiFeO3 Bilayer Structures for Compact Sequential Logics, Adv. Funct. Mater. 2014 , DOI: 10.1002/adfm.201303365.
[6] WO 2014/111481 A2, Komplementärer Widerstandsschalter, kontaktierte polykristalline Piezo- oder Ferroelektrische Dünnschicht, Verfahren zum Verschlüsseln einer Bitfolge, T. You, H. Schmidt, N. Du, D. Bürger, I. Skopura, Y. Shuai, 2014.

## Patentansprüche

1. Enkodierer (100) zur Enkodierung eines Eingangs-Binärwerts einer binären Eingangs-Datensequenz durch Erzeugung eines Ausgangsstroms eines Ausgangs-Stromsignals, wobei der Enkodierer (100) umfasst:
ein Steuermodul (110) und
ein schaltbares Widerstandselement (120), das ausgebildet ist, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden,
wobei das Steuermodul (110) ausgebildet ist, zu dem ersten Zeitpunkt die erste Eingangsspannung an das schaltbare Widerstandselement (120) anzulegen, so dass die erste Eingangsspannung von dem besagten Eingangs-Binärwert abhängt,
wobei das Steuermodul (110) ausgebildet ist, zu dem zweiten Zeitpunkt die zweite Eingangsspannung an das schaltbare Widerstandselement (120) anzulegen, so dass die zweite Eingangsspannung von einem Pseudozufalls-Binärwert einer Mehrzahl von Pseudozufalls-Binärwerten einer ersten binären Pseudozufalls-Datensequenz abhängt,
wobei das Steuermodul (110) ausgebildet ist, zu einem dritten Zeitpunkt nach dem zweiten Zeitpunkt, eine dritte Eingangsspannung an das schaltbare Widerstandselement (120) anzulegen, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt, und
wobei das schaltbare Widerstandselement (120) ausgebildet ist, auf das Anlegen der dritten Eingangsspannung zu dem dritten Zeitpunkt hin, den besagten Ausgangsstrom auszugeben, so dass der besagte Ausgangsstrom von der dritten Eingangsspannung abhängig ist und davon abhängig ist, ob sich das schaltbare Widerstandselement (120) in dem ersten Zustand oder in dem zweiten Zustand befindet, wobei das Steuermodul (110) einen Multiplexer (115) und Leitungen aufweist, wobei der Multiplexer (115) ausgebildet ist, die Leitungen zu verbinden,
wobei das Steuermodul (110) ausgebildet ist, die erste Eingangsspannung, die zweite Eingangsspannung und die dritte Eingangsspannung über die Leitungen und über den Multiplexer (115) an das schaltbare Widerstandselement (120) anzulegen.

2. Enkodierer (100) nach Anspruch 1,
wobei das schaltbare Widerstandselement (120) ausgebildet ist, auf das Anlegen der dritten Eingangsspannung zu dem dritten Zeitpunkt hin, den besagten Ausgangsstrom auszugeben,
so dass der besagte Ausgangsstrom einen ersten Ausgangsstromwert aufweist, wenn die dritte Eingangsspannung einen ersten Eingangsspannungswert aufweist und sich das schaltbare Widerstandselement (120) in dem ersten Zustand befindet,
so dass der besagte Ausgangsstrom einen zweiten Ausgangsstromwert aufweist, der größer als der erste Ausgangsstromwert ist, wenn die dritte Eingangsspannung einen zweiten Eingangsspannungswert aufweist und sich das schaltbare Widerstandselement (120) in dem ersten Zustand befindet,
so dass der besagte Ausgangsstrom einen dritten Ausgangsstromwert aufweist, wenn die dritte Eingangsspannung den ersten Eingangsspannungswert aufweist und sich das schaltbare Widerstandselement (120) in dem zweiten Zustand befindet, und
so dass der besagte Ausgangsstrom einen vierten Ausgangsstromwert aufweist, der kleiner als der dritte Ausgangsstromwert ist, wenn die dritte Eingangsspannung den zweiten Eingangsspannungswert aufweist und sich das schaltbare Widerstandselement (120) in dem zweiten Zustand befindet,
wobei der erste Ausgangsstromwert und der vierte Ausgangsstromwert gleich oder verscheiden sind, und wobei der zweite Ausgangsstromwert und der dritte Ausgangsstromwert gleich oder verscheiden sind.

3. Enkodierer (100) nach Anspruch 1 oder 2,
wobei das schaltbare Widerstandselement (120) ein Memristor ist.

4. Enkodierer (100) nach einem der vorherigen Ansprüche,
wobei das Steuermodul (110) einen ersten Pseudozufallsgenerator (111) umfasst, der ausgebildet ist, die erste Pseudo-Zufallsgeneratorsequenz zu erzeugen, oder
wobei das Steuermodul (110) den ersten Pseudozufallsgenerator (111) umfasst, der ausgebildet ist, die erste Pseudo-Zufallsgeneratorsequenz zu erzeugen, und wobei das Steuermodul (110) einen zweiten Pseudozufallsgenerator (112) umfasst, der ausgebildet ist, die zweite Pseudo-Zufallsgeneratorsequenz zu erzeugen.

5. Enkodierer (100) nach einem der vorherigen Ansprüche,
wobei das Steuermodul (110) ausgebildet ist, den besagten Eingangs-Binärwert mit dem besagten Pseudozufalls-Binärwert der Mehrzahl von Pseudozufalls-Binärwerten der zweiten binären Pseudozufalls-Datensequenz durch eine Boolesche Operation zu verknüpfen, um einen Kombinations-Binärwert zu erhalten,
wobei das Steuermodul (110) ausgebildet ist, zu dem ersten Zeitpunkt die erste Eingangsspannung an das schaltbare Widerstandselement (120) anzulegen, so dass die erste Eingangsspannung von dem Kombinations-Binärwert abhängt,
wobei das Steuermodul (110) ausgebildet ist, zu dem dritten Zeitpunkt die dritte Eingangsspannung an das schaltbare Widerstandselement (120) anzulegen, so dass die dritte Eingangsspannung von dem besagten Pseudozufalls-Binärwert der Mehrzahl von Pseudozufalls-Binärwerten der zweiten binären Pseudozufalls-Datensequenz abhängt.

6. Enkodierer (100) nach Anspruch 5,
wobei die Boolesche Operation eine XOR-Operation oder eine XNOR Operation ist.

7. Enkodierer (100) nach Anspruch 5 oder 6,
wobei das Steuermodul (110) ausgebildet ist, zu dem dritten Zeitpunkt die dritte Eingangsspannung an das schaltbare Widerstandselement (120) anzulegen, so dass die dritte Eingangsspannung nicht von dem besagten Eingangs-Binärwert abhängt.

8. Enkodierer (100) nach einem der vorherigen Ansprüche,
wobei das Steuermodul (110) ausgebildet ist, die erste Eingangsspannung an das schaltbare Widerstandselement (120) anzulegen, so dass die erste Eingangsspannung abhängig von dem besagten Eingangs-Binärwert entweder positiv ist oder negativ ist, und
wobei das Steuermodul (110) ausgebildet ist, die zweite Eingangsspannung an das schaltbare Widerstandselement (120) anzulegen, so dass die zweite Eingangsspannung abhängig von dem besagten Pseudozufalls-Binärwert der Mehrzahl von Pseudozufalls-Binärwerten der ersten binären Pseudozufalls-Datensequenz entweder positiv ist oder negativ ist, und
wobei das Steuermodul (110) ausgebildet ist, die dritte Eingangsspannung an das schaltbare Widerstandselement (120) anzulegen, so dass die dritte Eingangsspannung abhängig von dem besagten Pseudozufalls-Binärwert der Mehrzahl von Pseudozufalls-Binärwerten der ersten binären Pseudozufalls-Datensequenz oder abhängig von dem besagten Pseudozufalls-Binärwert der Mehrzahl von Pseudozufalls-Binärwerten der zweiten binären Pseudozufalls-Datensequenz entweder positiv ist oder negativ ist.

9. Enkodierer (100) nach Anspruch 8,
wobei das Steuermodul (110) ausgebildet ist, eine Amplitude der ersten Eingangsspannung und/oder der zweiten Eingangsspannung abhängig von einem Pseudo-Zufallswert einer dritten Pseudozufalls-Datensequenz zu bestimmen.

10. Enkodierer (100) nach Anspruch 9,
wobei das Steuermodul (110) ausgebildet ist, für die Amplitude der ersten Eingangsspannung und/oder der zweiten Eingangsspannung einen von drei oder mehreren verschiedenen Amplitudenwerten abhängig von dem besagten Pseudo-Zufallswert der dritten Pseudozufalls-Datensequenz zu bestimmen.

11. Enkodierer (100) nach Anspruch 10,
wobei das Steuermodul (110) einen dritten Pseudozufallsgenerator (113) umfasst, der ausgebildet ist, die dritte Pseudo-Zufallsgeneratorsequenz zu erzeugen, so dass jeder Pseudo-Zufallswert der dritten Pseudozufalls-Datensequenz einen von drei oder mehr verschiedenen Zahlenwerten annimmt.

12. Dekodierer (200) zur Dekodierung eines Eingangsstroms eines Eingangs-Stromsignals durch Ausgabe eines Ausgangs-Binärwerts einer binären Ausgangs-Datensequenz, wobei der Dekodierer (200) umfasst:
ein Steuermodul (210),
ein schaltbares Widerstandselement (220), das ausgebildet ist, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden, und
einen Komparator (230),
wobei das Steuermodul (210) ausgebildet ist, zu dem ersten Zeitpunkt die erste Eingangsspannung an das schaltbare Widerstandselement (220) anzulegen, so dass die erste Eingangsspannung von einem Probe-Binärwert einer Mehrzahl von Probe-Binärwerten abhängt,
wobei das Steuermodul (210) ausgebildet ist, zu dem zweiten Zeitpunkt die zweite Eingangsspannung an das schaltbare Widerstandselement (220) anzulegen, so dass die zweite Eingangsspannung von einem Pseudozufalls-Binärwert einer Mehrzahl von Pseudozufalls-Binärwerten einer ersten binären Pseudozufalls-Datensequenz abhängt,
wobei das Steuermodul (210) ausgebildet ist, zu einem dritten Zeitpunkt nach dem zweiten Zeitpunkt, eine dritte Eingangsspannung an das schaltbare Widerstandselement (220) anzulegen, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt, und
wobei das schaltbare Widerstandselement (220) ausgebildet ist, auf das Anlegen der dritten Eingangsspannung zu dem dritten Zeitpunkt hin, dem Komparator (230) einen Ausgangsstrom bereitzustellen, so dass der besagte Ausgangsstrom von der dritten Eingangsspannung abhängig ist und davon abhängig ist, ob sich das schaltbare Widerstandselement (220) in dem ersten Zustand oder in dem zweiten Zustand befindet,
wobei der Komparator (230) ausgebildet ist, einen Vergleich zwischen dem besagten Ausgangsstrom und dem besagten Eingangsstrom durchzuführen, wobei der Komparator (230) ausgebildet ist, abhängig von dem Vergleich und von dem besagten Probe-Binärwert den besagten Ausgangs-Binärwert zu bestimmen, und wobei der Komparator (230) ausgebildet ist, den besagten Ausgangs-Binärwert auszugeben,
wobei das Steuermodul (210) einen Multiplexer (215) und Leitungen aufweist, wobei der Multiplexer (215) ausgebildet ist, die Leitungen zu verbinden,
wobei das Steuermodul (210) ausgebildet ist, die erste Eingangsspannung, die zweite Eingangsspannung und die dritte Eingangsspannung über die Leitungen und über den Multiplexer (215) an das schaltbare Widerstandselement (220) anzulegen.

13. Dekodierer (200) nach Anspruch 12,
wobei der Komparator (230) ausgebildet ist, als den besagten Ausgangs-Binärwert den besagten Probe-Binärwert zu bestimmen und auszugeben, wenn ein Betrag einer Differenz zwischen dem Ausgangsstrom und dem besagten Eingangsstrom kleiner als ein Grenzwert ist, und
wobei der Komparator (230) ausgebildet ist, als den besagten Ausgangs-Binärwert einen invertierten Binärwert des besagten Probe-Binärwerts zu bestimmen und auszugeben, wenn ein Betrag einer Differenz zwischen dem Ausgangsstrom und dem besagten Eingangsstrom größer oder gleich dem Grenzwert ist.

14. Dekodierer (200) nach Anspruch 12 oder 13,
wobei das schaltbare Widerstandselement (220) ausgebildet ist, auf das Anlegen der dritten Eingangsspannung zu dem dritten Zeitpunkt hin, dem Komparator (230) den besagten Ausgangsstrom bereitzustellen,
so dass der besagte Ausgangsstrom einen ersten Ausgangsstromwert aufweist, wenn die dritte Eingangsspannung einen ersten Eingangsspannungswert aufweist und sich das schaltbare Widerstandselement (220) in dem ersten Zustand befindet,
so dass der besagte Ausgangsstrom einen zweiten Ausgangsstromwert aufweist, der größer als der erste Ausgangsstromwert ist, wenn die dritte Eingangsspannung einen zweiten Eingangsspannungswert aufweist und sich das schaltbare Widerstandselement (220) in dem ersten Zustand befindet,
so dass der besagte Ausgangsstrom einen dritten Ausgangsstromwert aufweist, wenn die dritte Eingangsspannung den ersten Eingangsspannungswert aufweist und sich das schaltbare Widerstandselement (220) in dem zweiten Zustand befindet, und
so dass der besagte Ausgangsstrom einen vierten Ausgangsstromwert aufweist, der kleiner als der dritte Ausgangsstromwert ist, wenn die dritte Eingangsspannung den zweiten Eingangsspannungswert aufweist und sich das schaltbare Widerstandselement (220) in dem zweiten Zustand befindet,
wobei der erste Ausgangsstromwert und der vierte Ausgangsstromwert gleich oder verscheiden sind, und wobei der zweite Ausgangsstromwert und der dritte Ausgangsstromwert gleich oder verscheiden sind.

15. Dekodierer (200) nach einem der Ansprüche 12 bis 14,
wobei das schaltbare Widerstandselement (220) ein Memristor ist.

16. Dekodierer (200) nach einem der Ansprüche 12 bis 15,
wobei das Steuermodul (210) einen ersten Pseudozufallsgenerator (211) umfasst, der ausgebildet ist, die erste Pseudo-Zufallsgeneratorsequenz zu erzeugen, oder
wobei das Steuermodul (210) den ersten Pseudozufallsgenerator (211) umfasst, der ausgebildet ist, die erste Pseudo-Zufallsgeneratorsequenz zu erzeugen, und wobei das Steuermodul (210) einen zweiten Pseudozufallsgenerator (212) umfasst, der ausgebildet ist, die zweite Pseudo-Zufallsgeneratorsequenz zu erzeugen.

17. Dekodierer (200) nach einem der Ansprüche 12 bis 16,
wobei das Steuermodul (210) ausgebildet ist, den besagten Probe-Binärwert mit dem besagten Pseudozufalls-Binärwert der Mehrzahl von Pseudozufalls-Binärwerten der zweiten binären Pseudozufalls-Datensequenz durch eine Boolesche Operation zu verknüpfen, um einen Kombinations-Binärwert zu erhalten,
wobei das Steuermodul (210) ausgebildet ist, zu dem ersten Zeitpunkt die erste Eingangsspannung an das schaltbare Widerstandselement (220) anzulegen, so dass die erste Eingangsspannung von dem Kombinations-Binärwert abhängt,
wobei das Steuermodul (210) ausgebildet ist, zu dem dritten Zeitpunkt die dritte Eingangsspannung an das schaltbare Widerstandselement (220) anzulegen, so dass die dritte Eingangsspannung von dem besagten Pseudozufalls-Binärwert der Mehrzahl von Pseudozufalls-Binärwerten der zweiten binären Pseudozufalls-Datensequenz abhängt.

18. Dekodierer (200) nach Anspruch 17,
wobei die Boolesche Operation eine XOR-Operation oder eine XNOR Operation ist.

19. Dekodierer (200) nach Anspruch 17 oder 18,
wobei das Steuermodul (210) ausgebildet ist, zu dem dritten Zeitpunkt die dritte Eingangsspannung an das schaltbare Widerstandselement (220) anzulegen, so dass die dritte Eingangsspannung nicht von dem besagten Probe-Binärwert abhängt.

20. Dekodierer (200) nach einem der Ansprüche 12 bis 19,
wobei das Steuermodul (210) ausgebildet ist, die erste Eingangsspannung an das schaltbare Widerstandselement (220) anzulegen, so dass die erste Eingangsspannung abhängig von dem besagten Eingangs-Binärwert entweder positiv ist oder negativ ist, und
wobei das Steuermodul (210) ausgebildet ist, die zweite Eingangsspannung an das schaltbare Widerstandselement (220) anzulegen, so dass die zweite Eingangsspannung abhängig von dem besagten Pseudozufalls-Binärwert der Mehrzahl von Pseudozufalls-Binärwerten der ersten binären Pseudozufalls-Datensequenz entweder positiv ist oder negativ ist, und
wobei das Steuermodul (210) ausgebildet ist, die dritte Eingangsspannung an das schaltbare Widerstandselement (220) anzulegen, so dass die dritte Eingangsspannung abhängig von dem besagten Pseudozufalls-Binärwert der Mehrzahl von Pseudozufalls-Binärwerten der ersten binären Pseudozufalls-Datensequenz oder abhängig von dem besagten Pseudozufalls-Binärwert der Mehrzahl von Pseudozufalls-Binärwerten der zweiten binären Pseudozufalls-Datensequenz entweder positiv ist oder negativ ist.

21. Dekodierer (200) nach Anspruch 20,
wobei das Steuermodul (210) ausgebildet ist, eine Amplitude der ersten Eingangsspannung und/oder der zweiten Eingangsspannung abhängig von einem Pseudo-Zufallswert einer dritten Pseudozufalls-Datensequenz zu bestimmen.

22. Dekodierer (200) nach Anspruch 21,
wobei das Steuermodul (210) ausgebildet ist, für die Amplitude der ersten Eingangsspannung und/oder der zweiten Eingangsspannung einen von drei oder mehreren verschiedenen Amplitudenwerten abhängig von dem besagten Pseudo-Zufallswert der dritten Pseudozufalls-Datensequenz zu bestimmen.

23. Dekodierer (200) nach Anspruch 22,
wobei das Steuermodul (210) einen dritten Pseudozufallsgenerator (213) umfasst, der ausgebildet ist, die dritte Pseudo-Zufallsgeneratorsequenz zu erzeugen, so dass jeder Pseudo-Zufallswert der dritten Pseudozufalls-Datensequenz einen von drei oder mehr verschiedenen Zahlenwerten annimmt.

24. Dekodierer (200) nach einem der Ansprüche 12 bis 23,
wobei jeder Probe-Binärwert der Mehrzahl von Probe-Binärwerten immer denselben Binärwert aufweist.

25. System, umfassend:
einen Enkodierer (100) nach einem der Ansprüche 1 bis 11 zur Enkodierung eines Eingangs-Binärwerts einer binären Eingangs-Datensequenz durch Erzeugung eines Ausgangsstroms eines Ausgangs-Stromsignals, und
einen Dekodierer (200) nach einem der Ansprüche 12 bis 24 zur Dekodierung eines Eingangsstroms eines Eingangs-Stromsignals durch Ausgabe eines Ausgangs-Binärwerts einer binären Ausgangs-Datensequenz,
wobei der Dekodierer (200) nach einem der Ansprüche 12 bis 24 ausgebildet ist, den vom Enkodierer (100) nach einem der Ansprüche 1 bis 11 erzeugten Ausgangsstrom als Eingangsstrom zu verwenden und zu dekodieren.

26. System nach Anspruch 25,
wobei die erste binäre Pseudozufalls-Datensequenz des Enkodierers (100) nach einem der Ansprüche 1 bis 11 und die erste binäre Pseudozufalls-Datensequenz des Dekodierers (200) nach einem der Ansprüche 12 bis 24 gleich sind,
wobei die zweite binäre Pseudozufalls-Datensequenz des Enkodierers (100) nach einem der Ansprüche 1 bis 11 und die zweite binäre Pseudozufalls-Datensequenz des Dekodierers (200) nach einem der Ansprüche 12 bis 24 gleich sind,
wobei das schaltbare Widerstandselement (120) des Enkodierers (100) nach einem der Ansprüche 1 bis 11 und das schaltbare Widerstandselement (220) des Dekodierers (200) nach einem der Ansprüche 12 bis 24 ausgebildet sind, bei gleicher erster Eingangsspannung und bei gleicher zweiten Eingangsspannung sich beide entweder in dem ersten Zustand oder sich beide in dem zweiten Zustand befinden, und
wobei das schaltbare Widerstandselement (120) des Enkodierers (100) nach einem der Ansprüche 1 bis 11 und das schaltbare Widerstandselement (220) des Dekodierers (200) nach einem der Ansprüche 12 bis 24 ausgebildet sind, auf ein Anlegen der derselben dritten Eingangsspannung hin, einen gleichen Ausgangsstrom bereitzustellen oder auszugeben.

27. Verfahren zur Enkodierung eines Eingangs-Binärwerts einer binären Eingangs-Datensequenz durch Erzeugung eines Ausgangsstroms eines Ausgangs-Stromsignals, wobei ein schaltbares Widerstandselement (120) ausgebildet ist, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden, wobei das Verfahren umfasst:
Anlegen der ersten Eingangsspannung an das schaltbare Widerstandselement (120) zu dem ersten Zeitpunkt, so dass die erste Eingangsspannung von dem besagten Eingangs-Binärwert abhängt,
Anlegen der zweiten Eingangsspannung an das schaltbare Widerstandselement (120) zu dem zweiten Zeitpunkt, so dass die zweite Eingangsspannung von einem Pseudozufalls-Binärwert einer Mehrzahl von Pseudozufalls-Binärwerten einer ersten binären Pseudozufalls-Datensequenz abhängt,
Anlegen einer dritten Eingangsspannung an das schaltbare Widerstandselement (120) zu einem dritten Zeitpunkt nach dem zweiten Zeitpunkt, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt, und
auf das Anlegen der dritten Eingangsspannung zu dem dritten Zeitpunkt hin, Ausgeben des besagten Ausgangsstroms durch das schaltbare Widerstandselement (120); so dass der besagte Ausgangsstrom von der dritten Eingangsspannung abhängig ist und davon abhängig ist, ob sich das schaltbare Widerstandselement (120) in dem ersten Zustand oder in dem zweiten Zustand befindet,
wobei die erste Eingangsspannung, die zweite Eingangsspannung und die dritte Eingangsspannung über Leitungen und über einen Multiplexer (115) an das schaltbare Widerstandselement (120) angelegt werden, wobei der Multiplexer (115) ausgebildet ist, die Leitungen zu verbinden.

28. Verfahren zur Dekodierung eines Eingangsstroms eines Eingangs-Stromsignals durch Ausgabe eines Ausgangs-Binärwerts einer binären Ausgangs-Datensequenz, wobei ein schaltbares Widerstandselement (220) ausgebildet ist, sich abhängig von einer ersten Eingangsspannung zu einem ersten Zeitpunkt und abhängig von einer zweiten Eingangsspannung zu einem späteren zweiten Zeitpunkt entweder in einem ersten Zustand oder ein einem anderen zweiten Zustand zu befinden, wobei das Verfahren umfasst:
Anlegen der ersten Eingangsspannung an das schaltbare Widerstandselement (220) zu dem ersten Zeitpunkt, so dass die erste Eingangsspannung von einem Probe-Binärwert einer Mehrzahl von Probe-Binärwerten abhängt,
Anlegen der zweiten Eingangsspannung an das schaltbare Widerstandselement (220) zu dem zweiten Zeitpunkt, so dass die zweite Eingangsspannung von einem Pseudozufalls-Binärwert einer Mehrzahl von Pseudozufalls-Binärwerten einer ersten binären Pseudozufalls-Datensequenz abhängt,
Anlegen einer dritten Eingangsspannung an das schaltbare Widerstandselement (220) zu einem dritten Zeitpunkt nach dem zweiten Zeitpunkt, so dass die dritte Eingangsspannung von dem besagten Pseudozufalls-Binärwert der Mehrzahl von Pseudozufalls-Binärwerten der ersten binären Pseudozufalls-Datensequenz abhängt oder von einem Pseudozufalls-Binärwert einer Mehrzahl von Pseudozufalls-Binärwerten einer zweiten binären Pseudozufalls-Datensequenz abhängt,
auf das Anlegen der dritten Eingangsspannung zu dem dritten Zeitpunkt hin, Bereitstellen eines Ausgangsstroms durch das schaltbare Widerstandselement (220); so dass der besagte Ausgangsstrom von der dritten Eingangsspannung abhängig ist und davon abhängig ist, ob sich das schaltbare Widerstandselement (220) in dem ersten Zustand oder in dem zweiten Zustand befindet, und
Durchführen eines Vergleichs zwischen dem besagten Ausgangsstrom und dem besagten Eingangsstrom, Bestimmen des besagten Ausgangs-Binärwerts abhängig von dem Vergleich und von dem besagten Probe-Binärwert, und Ausgeben des besagten Ausgangs-Binärwerts,
wobei die erste Eingangsspannung, die zweite Eingangsspannung und die dritte Eingangsspannung über Leitungen und über einen Multiplexer (115) an das schaltbare Widerstandselement (120) angelegt werden, wobei der Multiplexer (115) ausgebildet ist, die Leitungen zu verbinden.

29. Computerprogramm mit einem Programmcode, der bei der Ausführung des Programms durch einen Computer diesen Veranlassen, das Verfahren nach Anspruch 27 oder 28 auszuführen.

## Claims

1. An encoder (100) for encoding an input binary value of a binary input data sequence by generating an output current of an output current signal, the encoder (100) including:
a control module (110); and
a switchable resistive element (120) configured to either be in a first state or in a different second state depending on a first input voltage at a first point in time and depending on a second input voltage at a later second point in time,
wherein the control module (110) is configured to apply the first input voltage to the switchable resistive element (120) at the first point in time so that the first input voltage depends on said input binary value,
wherein the control module (110) is configured to apply the second input voltage to the switchable resistive element (120) at the second point in time so that the second input voltage depends on a pseudo-random binary value of a plurality of pseudo-random binary values of a first binary pseudo-random data sequence,
wherein the control module (110) is configured to apply a third input voltage to the switchable resistive element (120) at a third point in time after the second point in time so that the third input voltage depends on said pseudo-random binary value of the plurality of pseudo-random binary values of the first binary pseudo-random data sequence or depends on a pseudo-random binary value of a plurality of pseudo-random binary values of a second binary pseudo-random data sequence, and
wherein switchable resistive element (120) is configured, upon applying the third input voltage at the third point in time, to output said output current so that said output current depends on the third input voltage and depends on whether the switchable resistive element (120) is in the first state or in the second state,
wherein the control module (110) comprises a multiplexer (115) and lines, wherein the multiplexer (115) is configured to connect the lines,
wherein the control module (110) is configured to apply the first input voltage, the second input voltage and the third input voltage to the switchable resistive element (120) via the lines and via the multiplexer (115).

2. The encoder (100) according to claim 1,
wherein the switchable resistive element (120) may be configured, upon applying the third input voltage at the third point in time, to output said output current,
so that said output current comprises a first output current value if the third input voltage comprises a first input voltage value and the switchable resistive element (120) is in the first state,
so that said output current comprises a second output current value larger than the first output current value if the third input voltage comprises a second input voltage value and the switchable resistive element (120) is in the first state,
so that said output current comprises a third output current value if the third input voltage comprises the first input voltage value and the switchable resistive element (120) is in the second state, and
so that said output current comprises a fourth output current value smaller than the third output current value if the third input voltage comprises the second input voltage value and the switchable resistive element (120) is in the second state,
wherein the first output current value and the fourth output current value are equal or different, and wherein the second output current value and the third output current value are equal or different.

3. The encoder (100) according to claim 1 or 2,
wherein the switchable resistive element (120) is a memristor.

4. The encoder (100) according to any one of the preceding claims,
wherein the control module (110) includes a first pseudo-random generator (111) configured to generate the first pseudo-random generator sequence, or
wherein the control module (110) includes the first pseudo-random generator (111) configured to generate the first pseudo-random generator sequence, and wherein the control module (110) includes a second pseudo-random generator (112) configured to generate the second pseudo-random generator sequence.

5. The encoder (100) according to any one of the preceding claims,
wherein the control module (110) is configured to link said input binary value to said pseudo-random binary value of the plurality of pseudo-random binary values of the second binary pseudo-random data sequence by means of a Boolean operation in order to obtain a combination binary value,
wherein the control module (110) is configured to apply the first input voltage to the switchable resistive element (120) at the first point in time so that the first input voltage depends on the combination binary value,
wherein the control module (110) is configured to apply the third input voltage to the switchable resistive element (120) at the third point in time so that the third input voltage depends on said pseudo-random binary value of the plurality of pseudo-random binary values of the second binary pseudo-random data sequence.

6. The encoder (100) according to claim 5,
wherein the Boolean operation is a XOR operation or a XNOR operation.

7. The encoder (100) according to claim 5 or 6,
wherein the control module (110) is configured to apply the third input voltage to the switchable resistive element (120) at the third point in time so that the third input voltage does not depend on said input binary value.

8. The encoder (100) according to any one of the preceding claims,
wherein the control module (110) is configured to apply the first input voltage to the switchable resistive element (120) so that the first input voltage is either positive or negative depending on said input binary value, and
wherein the control module (110) is configured to apply the second input voltage to the switchable resistive element (120) so that the second input voltage is either positive or negative depending on said pseudo-random binary value of the plurality of pseudo-random binary values of the first binary pseudo-random data sequence, and
wherein the control module (110) is configured to apply the third input voltage to the switchable resistive element (120) so that the third input voltage is either positive or negative depending on said pseudo-random binary value of the plurality of pseudo-random binary values of the first binary pseudo-random data sequence or depending on said pseudo-random binary value of the plurality of pseudo-random binary values of the second binary pseudo-random data sequence.

9. The encoder (100) according to claim 8,
wherein the control module (110) is configured to determine an amplitude of the first input voltage and/or of the second input voltage depending on a pseudo-random value of a third pseudo-random data sequence.

10. The encoder (100) according to claim 9,
wherein the control module (110) is configured to determine one of three or more different amplitude values for the amplitude of the first input voltage and/or of the second input voltage depending on said pseudo-random value of the third pseudo-random data sequence.

11. The encoder (100) according to claim 10,
wherein the control module (110) includes a third pseudo-random generator (113) configured to generate the third pseudo-random generator sequence so that each pseudo-random value of the third pseudo-random data sequence adopts one of three or more different numeric values.

12. A decoder (200) for decoding an input current of an input current signal by outputting an output binary value of a binary output data sequence, the decoder (200) including:
a control module (210),
a switchable resistive element (220) configured to either be in a first state or in a different second state depending on a first input voltage at a first point in time and depending on a second input voltage at a later second point in time, and
a comparator (230),
wherein control module (210) is configured to apply the first input voltage to the switchable resistive element (220) at the first point in time so that the first input voltage depends on a sample binary value of a plurality of sample binary values,
wherein the control module (210) is configured to apply the second input voltage to the switchable resistive element (220) at the second point in time so that the second input voltage depends on a pseudo-random binary value of a plurality of pseudo-random binary values of a first binary pseudo-random data sequence,
wherein the control module (210) is configured to apply a third input voltage to the switchable resistive element (220) at a third point in time after the second point in time so that the third input voltage depends on said pseudo-random binary value of the plurality of pseudo-random binary values of the first binary pseudo-random data sequence or depends on a pseudo-random binary value of a plurality of pseudo-random binary values of a second binary pseudo-random data sequence, and
wherein the switchable resistive element (220) is configured, upon applying the third input voltage at the third point in time, to provide an output current to the comparator (230) so that said output current depends on the third input voltage and depends on whether the switchable resistive element (220) is in the first state or in the second state,
wherein the comparator (230) is configured to perform a comparison between said output current and said input current, wherein the comparator (230) is configured, depending on the comparison and said sample binary value, to determine said output binary value, and wherein the comparator (230) is configured to output said output binary value,
wherein the control module (210) comprises a multiplexer (215) and lines, wherein the multiplexer (215) is configured to connect the lines,
wherein the control module (210) is configured to apply the first input voltage, the second input voltage and the third input voltage to the switchable resistive element (220) via the lines and via the multiplexer (215).

13. The decoder (200) according to claim 12,
wherein the comparator (230) is configured to determine said sample binary value as said output binary value and output the same if a magnitude of a difference between the output current and the said input current is smaller than a threshold value and,
wherein the comparator (230) is configured to determine an inverted binary value of said sample binary value as said output binary value and output the same if a magnitude of a difference between the output current and said input current is larger than or equal to the threshold value.

14. The decoder (200) according to claim 12 or 13,
wherein the switchable resistive element (220) is configured, upon applying the third input voltage at the third point in time, to provide said output current to the comparator (230),
so that said output current comprises a first output current value if the third input voltage comprises a first input voltage value and the switchable resistive element (220) is in the first state,
so that said output current comprises a second output current value that is larger than the first output current value if the third input voltage comprises a second input voltage value and the switchable resistive element (220) is in the first state,
so that said output current comprises a third output current value if the third input voltage comprises the first input voltage value and the switchable resistive element (220) is in the second state, and
so that said output current comprises a fourth output current value that is smaller than the third output current value if the third input voltage comprises the second input voltage value and the switchable resistive element (220) is in the second state,
wherein the first output current value and the fourth output current value are equal or different, and wherein the second output current value and the third output current value are equal or different.

15. The decoder (200) according to any one of claims 12 to 14,
wherein the switchable resistive element (220) is a memristor.

16. The decoder (200) according to any one of claims 12 to 15,
wherein the control module (210) includes a first pseudo-random generator (211) configured to generate the first pseudo-random generator sequence, or
wherein the control module (210) includes the first pseudo-random generator (211) configured to generate the first pseudo-random generator sequence, and wherein the control module (210) includes a second pseudo-random generator (212) configured to generate the second pseudo-random generator sequence.

17. The decoder (200) according to any one of claims 12 to 16,
wherein the control module (210) is configured to link said sample binary value to said pseudo-random binary value of the plurality of pseudo-random binary values of the second binary pseudo-random data sequence by means of a Boolean operation in order to obtain a combination binary value,
wherein the control module (210) is configured to apply the first input voltage to the switchable resistive element (220) at the first point in time so that the first input voltage depends on the combination binary value,
wherein the control module (210) is configured to apply the third input voltage to the switchable resistive element (220) at the third point in time so that the third input voltage depends on said pseudo-random binary value of the plurality of pseudo-random binary values of the second binary pseudo-random data sequence.

18. The decoder (200) according to claim 17,
wherein the Boolean operation is a XOR operation or a XNOR operation.

19. The decoder (200) according to claim 17 or 18,
wherein the control module (210) is configured to apply the third input voltage to the switchable resistive element (220) at the third point in time so that the third input voltage does not depend on said sample binary value.

20. The decoder (200) according to any one of claims 12 to 19,
wherein the control module (210) is configured to apply the first input voltage to the switchable resistive element (220) so that the first input voltage is either positive or negative depending on said input binary value,
wherein the control module (210) is configured to apply the second input voltage to the switchable resistive element (220) so that the second input voltage is either positive or negative depending on said pseudo-random binary value of the plurality of pseudo-random binary values of the first binary pseudo-random data sequence, and
wherein the control module (210) is configured to apply the third input voltage to the switchable resistive element (220) so that the third input voltage is either positive or negative depending on said pseudo-random binary value of the plurality of pseudo-random binary values of the first binary pseudo-random data sequence or depending on said pseudo-random binary value of the plurality of pseudo-random binary values of the second binary pseudo-random data sequence.

21. The decoder (200) according to claim 20,
wherein the control module (210) is configured to determine an amplitude of the first input voltage and/or of the second input voltage depending on a pseudo-random value of a third pseudo-random data sequence.

22. The decoder (200) according to claim 21,
wherein the control module (210) is configured to determine one of three or more different amplitude values for the amplitude of the first input voltage and/or of the second input voltage depending on said pseudo-random value of the third pseudo-random data sequence.

23. The decoder (200) according to claim 22,
wherein the control module (210) includes a third pseudo-random generator (213) configured to generate the third pseudo-random generator sequence so that each pseudo-random value of the third pseudo-random data sequence adopts one of three or more different numeric values.

24. The decoder (200) according to any one of claims 12 to 23,
wherein each sample binary value of the plurality of sample binary values always comprises the same binary value.

25. A system, including:
an encoder (100) according to any one of claims 1 to 11 for encoding an input binary value of a binary input data sequence by generating an output current of an output current signal, and
a decoder (200) according to any one of claims 12 to 24 for decoding an input current of an input current signal by outputting an output binary value of a binary output data sequence,
wherein the decoder (200) according to any one of claims 12 to 24 is configured to use the output current generated by the encoder (100) according to any one of claims 1 to 11 as an input current and decode the same.

26. The system according to claim 25,
wherein the first binary pseudo-random data sequence of the encoder (100) according to any one of claims 1 to 11 and the first binary pseudo-random data sequence of the decoder (200) according to any one of claims 12 to 24 are the same,
wherein the second binary pseudo-random data sequence of the encoder (100) according to any one of claims 1 to 11 and the second binary pseudo-random data sequence of the decoder (200) according to any one of claims 12 to 24 are the same,
wherein the switchable resistive element (120) of the encoder (100) according to any one of claims 1 to 11 and the switchable resistive element (220) of the decoder (200) according to any one of claims 12 to 24 are configured, at the same first input voltage and at the same second input voltage, to both either be in the first state or to both either be in the second state, and
wherein the switchable resistive element (120) of the encoder (100) according to any one of claims 1 to 11 and the switchable resistive element (220) of the decoder (200) according to any one of claims 12 to 24 are configured, upon applying the same third input voltage, to provide or output a same output current.

27. A method for encoding an input binary value of a binary input data sequence by generating an output current of an output current signal, wherein a switchable resistive element (120) is configured to either be in a first state or in a different second state depending on a first input voltage at a first point in time and depending on a second input voltage at a later second point in time, the method including:
applying the first input voltage to the switchable resistive element (120) at the first point in time so that the first input voltage depends on said input binary value;
applying the second input voltage to the switchable resistive element (120) at the second point in time so that the second input voltage depends on a pseudo-random binary value of a plurality of pseudo-random binary values of a first binary pseudo-random data sequence;
applying a third input voltage to the switchable resistive element (120) at a third point in time after the second point in time so that the third input voltage depends on said pseudo-random binary value of the plurality of pseudo-random binary values of the first binary pseudo-random data sequence or depends on a pseudo-random binary value of a plurality of pseudo-random binary values of a second binary pseudo-random data sequence; and
upon applying the third input voltage at the third point in time, outputting said output current by the switchable resistive element (120); so that said output current depends on the third input voltage and depends on whether the switchable resistive element (120) is in the first state or in the second state,
wherein the first input voltage, the second input voltage and the third input voltage are applied to the switchable resistive element (120) via lines and via a multiplexer (115), wherein the multiplexer (115) is configured to connect the lines.

28. A method for decoding an input current of an input current signal by outputting an output binary value of a binary output data sequence, wherein a switchable resistive element (220) is configured to either be in a first state or in a different second state depending on a first input voltage at a first point in time and depending on a second input voltage at a later second point in time, the method including:
applying the first input voltage to the switchable resistive element (220) at the first point in time so that the first input voltage depends on a sample binary value of a plurality of sample binary values;
applying the second input voltage to the switchable resistive element (220) at the second point in time so that the second input voltage depends on a pseudo-random binary value of a plurality of pseudo-random binary values of a first binary pseudo-random data sequence;
applying a third input voltage to the switchable resistive element (220) at a third point in time after the second point in time so that the third input voltage depends on said pseudo-random binary value of the plurality of pseudo-random binary values of the first binary pseudo-random data sequence or depends on a pseudo-random binary value of a plurality of pseudo-random binary values of a second binary pseudo-random data sequence;
upon applying the third input voltage at the third point in time, providing an output current by the switchable resistive element (220); so that said output current depends on the third input voltage and depends on whether the switchable resistive element (220) is in the first state or in the second state, and
performing a comparison between said output current and said input current, determining said output binary value depending on the comparison and on said sample binary value, and outputting said output binary value,
wherein the first input voltage, the second input voltage and the third input voltage are applied to the switchable resistive element (120) via lines and via a multiplexer (120), wherein the multiplexer (215) is configured to connect the lines.

29. A computer program having a program code which, when executing the program by a computer, causes the same to perform the method according to claim 27 or 28.

## Revendications

1. Codeur (100) pour le codage d'une valeur binaire d'entrée d'une séquence de données d'entrée binaires en générant un flux de sortie d'un signal de flux de sortie, dans lequel le codeur (100) comporte:
un module de commande (110) et
un élément de résistance commutable (120) qui est conçu pour se trouver, en fonction d'une première tension d'entrée à un premier moment et en fonction d'une deuxième tension d'entrée à un deuxième moment ultérieur, soit dans un premier état, soit dans un deuxième état différent,
dans lequel le module de commande (110) est conçu pour appliquer, au premier moment, la première tension d'entrée à l'élément de résistance commutable (120), de sorte que la première tension d'entrée dépende de ladite valeur binaire d'entrée,
dans lequel le module de commande (110) est conçu pour appliquer, au deuxième moment, la deuxième tension d'entrée à l'élément de résistance commutable (120), de sorte que la deuxième tension d'entrée dépende d'une valeur binaire pseudo-aléatoire parmi une pluralité de valeurs binaires pseudo-aléatoires d'une première séquence de données binaires pseudo-aléatoires,
dans lequel le module de commande (110) est conçu pour appliquer, à un troisième moment après le deuxième moment, une troisième tension d'entrée à l'élément de résistance commutable (120), de sorte que la troisième tension d'entrée dépende de ladite valeur binaire pseudo-aléatoire parmi la pluralité de valeurs binaires pseudo-aléatoires de la première séquence de données binaires pseudo-aléatoires ou dépende d'une valeur binaire pseudo-aléatoire parmi une pluralité de valeurs binaires pseudo-aléatoires d'une deuxième séquence de données binaires pseudo-aléatoires, et
dans lequel l'élément de résistance commutable (120) est conçu pour sortir, suite à l'application de la troisième tension d'entrée au troisième moment, ledit flux de sortie, de sorte que ledit flux de sortie dépende de la troisième tension d'entrée et dépende de si l'élément de résistance commutable (120) se trouve dans le premier état ou dans le deuxième état,
dans lequel le module de commande (110) présente un multiplexeur (115) et des lignes, dans lequel le multiplexeur (115) est conçu pour connecter les lignes,
dans lequel le module de commande (110) est conçu pour appliquer la première tension d'entrée, la deuxième tension d'entrée et la troisième tension d'entrée par l'intermédiaire des lignes et par l'intermédiaire du multiplexeur (115) à l'élément de résistance commutable (120).

2. Codeur (100) selon la revendication 1,
dans lequel l'élément de résistance commutable (120) est conçu pour sortir, suite à l'application de la troisième tension d'entrée au troisième moment, ledit flux de sortie,
de sorte que ledit flux de sortie présente une première valeur de flux de sortie lorsque la troisième tension d'entrée présente une première valeur de tension d'entrée et que l'élément de résistance commutable (120) se trouve dans le premier état,
de sorte que ledit flux de sortie présente une deuxième valeur de flux de sortie, qui est supérieure à la première valeur de flux de sortie, lorsque la troisième tension d'entrée présente une deuxième valeur de tension d'entrée et que l'élément de résistance commutable (120) se trouve dans le premier état,
de sorte que ledit flux de sortie présente une troisième valeur de flux de sortie lorsque la troisième tension d'entrée présente la première valeur de tension d'entrée et que l'élément de résistance commutable (120) se trouve dans le deuxième état, et
de sorte que ledit flux de sortie présente une quatrième valeur de flux de sortie, qui est inférieure à la troisième valeur de flux de sortie, lorsque la troisième tension d'entrée présente la deuxième valeur de tension d'entrée et que l'élément de résistance commutable (120) se trouve dans le deuxième état,
dans lequel la première valeur de flux de sortie et la quatrième valeur de flux de sortie sont identiques ou différentes, et dans lequel la deuxième valeur de flux de sortie et la troisième valeur de flux de sortie sont identiques ou différentes.

3. Codeur (100) selon la revendication 1 ou 2,
dans lequel l'élément de résistance commutable (120) est un memristor.

4. Codeur (100) selon l'une des revendications précédentes,
dans lequel le module de commande (110) comporte un premier générateur de nombre pseudo-aléatoire (111) qui est conçu pour générer la première séquence de générateur de nombre pseudo-aléatoire, ou
dans lequel le module de commande (110) comporte le premier générateur de nombre pseudo-aléatoire (111) qui est conçu pour générer la première séquence de générateur de nombre pseudo-aléatoire, et dans lequel le module de commande (110) comporte un deuxième générateur de nombre pseudo-aléatoire (112) qui est conçu pour générer la deuxième séquence de générateur de nombre pseudo-aléatoire.

5. Codeur (100) selon l'une des revendications précédentes,
dans lequel le module de commande (110) est conçu pour combiner ladite valeur binaire d'entrée avec ladite valeur binaire pseudo-aléatoire parmi la pluralité de valeurs binaires pseudo-aléatoires de la deuxième séquence de données binaires pseudo-aléatoires par une opération booléenne pour obtenir une valeur binaire de combinaison,
dans lequel le module de commande (110) est conçu pour appliquer, au premier moment, la première tension d'entrée à l'élément de résistance commutable (120), de sorte que la première tension d'entrée dépende de la valeur binaire de combinaison,
dans lequel le module de commande (110) est conçu pour appliquer, au troisième moment, la troisième tension d'entrée à l'élément de résistance commutable (120), de sorte que la troisième tension d'entrée dépende de ladite valeur binaire pseudo-aléatoire parmi la pluralité de valeurs binaires pseudo-aléatoires de la deuxième séquence de données binaires pseudo-aléatoires.

6. Codeur (100) selon la revendication 5,
dans lequel l'opération booléenne est une opération XOR ou une opération XNOR.

7. Codeur (100) selon la revendication 5 ou 6,
dans lequel le module de commande (110) est conçu pour appliquer, au troisième moment, la troisième tension d'entrée à l'élément de résistance commutable (120), de sorte que la troisième tension d'entrée ne dépende pas de ladite valeur binaire d'entrée.

8. Codeur (100) selon l'une des revendications précédentes,
dans lequel le module de commande (110) est conçu pour appliquer la première tension d'entrée à l'élément de résistance commutable (120), de sorte que la première tension d'entrée soit ou bien positive, ou bien négative, en fonction de ladite valeur binaire d'entrée, et
dans lequel le module de commande (110) est conçu pour appliquer la deuxième tension d'entrée à l'élément de résistance commutable (120), de sorte que la deuxième tension d'entrée soit ou bien positive, ou bien négative, en fonction de ladite valeur binaire pseudo-aléatoire parmi la pluralité de valeurs binaires pseudo-aléatoires de la première séquence de données binaires pseudo-aléatoires, et
dans lequel le module de commande (110) est conçu pour appliquer la troisième tension d'entrée à l'élément de résistance commutable (120), de sorte que la troisième tension d'entrée soit ou bien positive, ou bien négative, en fonction de ladite valeur binaire pseudo-aléatoire parmi la pluralité de valeurs binaires pseudo-aléatoires de la première séquence de données binaires pseudo-aléatoires ou en fonction de ladite valeur binaire pseudo-aléatoire parmi la pluralité de valeurs binaires pseudo-aléatoires de la deuxième séquence de données binaires pseudo-aléatoires.

9. Codeur (100) selon la revendication 8,
dans lequel le module de commande (110) est conçu pour déterminer une amplitude de la première tension d'entrée et/ou de la deuxième tension d'entrée en fonction d'une valeur pseudo-aléatoire d'une troisième séquence de données pseudo-aléatoires.

10. Codeur (100) selon la revendication 9,
dans lequel le module de commande (110) est conçu pour déterminer, pour l'amplitude de la première tension d'entrée et/ou de la deuxième tension d'entrée, une parmi trois valeurs d'amplitude différentes ou plus en fonction de ladite valeur pseudo-aléatoire de la troisième séquence de données pseudo-aléatoires.

11. Codeur (100) selon la revendication 10,
dans lequel le module de commande (110) comporte un troisième générateur de nombre pseudo-aléatoire (113) qui est conçu pour générer la troisième séquence de générateur de nombre pseudo-aléatoire de sorte que chaque valeur pseudo-aléatoire de la troisième séquence de données pseudo-aléatoire adopte l'une parmi trois valeurs numériques différentes ou plus.

12. Décodeur (200) pour décoder un flux d'entrée d'un signal de flux d'entrée en sortant une valeur binaire de sortie d'une séquence de données binaires de sortie, dans lequel le décodeur (200) comprend:
un module de commande (210),
un élément de résistance commutable (220) qui est conçu pour se trouver, en fonction d'une première tension d'entrée à un premier moment et en fonction d'une deuxième tension d'entrée à un deuxième moment ultérieur, soit dans un premier état, soit dans un deuxième état différent,
un comparateur (230),
dans lequel le module de commande (210) est conçu pour appliquer la première tension d'entrée à l'élément de résistance commutable (220) au premier moment, de sorte que la première tension d'entrée dépende d'une valeur binaire d'essai parmi une pluralité de valeurs binaires d'essai,
dans lequel le module de commande (210) est conçu pour appliquer, au deuxième moment, la deuxième tension d'entrée à l'élément de résistance commutable (220), de sorte que la deuxième tension d'entrée dépende d'une valeur binaire pseudo-aléatoire parmi une pluralité de valeurs binaires pseudo-aléatoires d'une première séquence de données binaires pseudo-aléatoires,
dans lequel le module de commande (210) est conçu pour appliquer, à un troisième moment après le deuxième moment, une troisième tension d'entrée à l'élément de résistance commutable (220), de sorte que la troisième tension d'entrée dépende de ladite valeur binaire pseudo-aléatoire parmi la pluralité de valeurs binaires pseudo-aléatoires de la première séquence de données binaires pseudo-aléatoires ou dépende d'une valeur binaire pseudo-aléatoire parmi une pluralité de valeurs binaires pseudo-aléatoires d'une deuxième séquence de données binaires pseudo-aléatoires, et
dans lequel l'élément de résistance commutable (220) est conçu pour fournir, suite à l'application de la troisième tension d'entrée au troisième moment, un flux de sortie au comparateur (230), de sorte que ledit flux de sortie dépende de la troisième tension d'entrée et dépende de si l'élément de résistance commutable (220) se trouve dans le premier état ou dans le deuxième état,
dans lequel le comparateur (230) est conçu pour effectuer une comparaison entre ledit flux de sortie et ledit flux d'entrée, dans lequel le comparateur (230) est conçu pour déterminer ladite valeur binaire de sortie en fonction de la comparaison et de ladite valeur binaire d'essai, et dans lequel le comparateur (230) est conçu pour sortir ladite valeur binaire de sortie,
dans lequel le module de commande (210) présente un multiplexeur (215) et des lignes, dans lequel le multiplexeur (215) est conçu pour connecter les lignes,
dans lequel le module de commande (210) est conçu pour appliquer la première tension d'entrée, la deuxième tension d'entrée et la troisième tension d'entrée par l'intermédiaire des lignes et par l'intermédiaire du multiplexeur (215) à l'élément de résistance commutable (220).

13. Décodeur (200) selon la revendication 12,
dans lequel le comparateur (230) est conçu pour déterminer et sortir, comme ladite valeur binaire de sortie, ladite valeur binaire d'essai lorsqu'une quantité de différence entre le flux de sortie et ledit flux d'entrée est inférieure à une valeur limite, et
dans lequel le comparateur (230) est conçu pour déterminer et sortir, comme ladite valeur binaire de sortie, une valeur binaire inversée de ladite valeur binaire d'essai lorsqu'une quantité de différence entre le flux de sortie et ledit flux d'entrée est supérieure ou égale à la valeur limite.

14. Décodeur (200) selon la revendication 12 ou 13,
dans lequel l'élément de résistance commutable (220) est conçu pour fournir, suite à l'application de la troisième tension d'entrée au troisième moment, ledit flux de sortie au comparateur (230),
de sorte que ledit flux de sortie présente une première valeur de flux de sortie lorsque la troisième tension d'entrée présente une première valeur de tension d'entrée et que l'élément de résistance commutable (220) se trouve dans le premier état,
de sorte que ledit flux de sortie présente une deuxième valeur de flux de sortie, qui est supérieure à la première valeur de flux de sortie, lorsque la troisième tension d'entrée présente une deuxième valeur de tension d'entrée et que l'élément de résistance commutable (220) se trouve dans le premier état,
de sorte que ledit flux de sortie présente une troisième valeur de flux de sortie lorsque la troisième tension d'entrée présente la première valeur de tension d'entrée et que l'élément de résistance commutable (220) se trouve dans le deuxième état, et
de sorte que ledit flux de sortie présente une quatrième valeur de flux de sortie, qui est inférieure à la troisième valeur de flux de sortie, lorsque la troisième tension d'entrée présente la deuxième valeur de tension d'entrée et que l'élément de résistance commutable (220) se trouve dans le deuxième état,
dans lequel la première valeur de flux de sortie et la quatrième valeur de flux de sortie sont identiques ou différentes, et dans lequel la deuxième valeur de flux de sortie et la troisième valeur de flux de sortie sont identiques ou différentes.

15. Décodeur (200) selon l'une des revendications 12 à 14,
dans lequel l'élément de résistance commutable (220) est un memristor.

16. Décodeur (200) selon l'une des revendications 12 à 15,
dans lequel le module de commande (210) comporte un premier générateur de nombre pseudo-aléatoire (211) qui est conçu pour générer la première séquence de générateur de nombre pseudo-aléatoire, ou
dans lequel le module de commande (210) comporte le premier générateur de nombre pseudo-aléatoire (211) qui est conçu pour générer la première séquence de générateur de nombre pseudo-aléatoire, et dans lequel le module de commande (210) comporte un deuxième générateur de nombre pseudo-aléatoire (212) qui est conçu pour générer la deuxième séquence de générateur de nombre pseudo-aléatoire.

17. Décodeur (200) selon l'une des revendications 12 à 16,
dans lequel le module de commande (210) est conçu pour combiner ladite valeur binaire d'essai avec ladite valeur binaire pseudo-aléatoire parmi la pluralité de valeurs binaires pseudo-aléatoires de la deuxième séquence de données binaires pseudo-aléatoires par une opération booléenne pour obtenir une valeur binaire de combinaison,
dans lequel le module de commande (210) est conçu pour appliquer, au premier moment, la première tension d'entrée à l'élément de résistance commutable (220), de sorte que la première tension d'entrée dépende de la valeur binaire de combinaison,
dans lequel le module de commande (210) est conçu pour appliquer, au troisième moment, la troisième tension d'entrée à l'élément de résistance commutable (220), de sorte que la troisième tension d'entrée dépende de ladite valeur binaire pseudo-aléatoire parmi la pluralité de valeurs binaires pseudo-aléatoires de la deuxième séquence de données binaires pseudo-aléatoires.

18. Décodeur (200) selon la revendication 17,
dans lequel l'opération booléenne est une opération XOR ou une opération XNOR.

19. Décodeur (200) selon la revendication 17 ou 18,
dans lequel le module de commande (210) est conçu pour appliquer, au troisième moment, la troisième tension d'entrée à l'élément de résistance commutable (220), de sorte que la troisième tension d'entrée ne dépende pas de ladite valeur binaire d'essai.

20. Décodeur (200) selon l'une des revendications 12 à 19,
dans lequel le module de commande (210) est conçu pour appliquer la première tension d'entrée à l'élément de résistance commutable (220), de sorte que la première tension d'entrée soit, en fonction de ladite valeur binaire d'entrée, ou bien positive, ou bien négative, et
dans lequel le module de commande (210) est conçu pour appliquer la deuxième tension d'entrée à l'élément de résistance commutable (220), de sorte que la deuxième tension d'entrée soit ou bien positive, ou bien négative, en fonction de ladite valeur binaire pseudo-aléatoire parmi la pluralité de valeurs binaires pseudo-aléatoires de la première séquence de données binaires pseudo-aléatoires, et
dans lequel le module de commande (210) est conçu pour appliquer la troisième tension d'entrée à l'élément de résistance commutable (220), de sorte que la troisième tension d'entrée soit ou bien positive, ou bien négative, en fonction de ladite valeur binaire pseudo-aléatoire parmi la pluralité de valeurs binaires pseudo-aléatoires de la première séquence de données binaires pseudo-aléatoires ou en fonction de ladite valeur binaire pseudo-aléatoire parmi la pluralité de valeurs binaires pseudo-aléatoires de la deuxième séquence de données binaires pseudo-aléatoires.

21. Décodeur (200) selon la revendication 20,
dans lequel le module de commande (210) est conçu pour déterminer une amplitude de la première tension d'entrée et/ou de la deuxième tension d'entrée en fonction d'une valeur pseudo-aléatoire d'une troisième séquence de données pseudo-aléatoires.

22. Décodeur (200) selon la revendication 21,
dans lequel le module de commande (210) est conçu pour déterminer, pour l'amplitude de la première tension d'entrée et/ou de la deuxième tension d'entrée, l'une parmi trois valeurs d'amplitude différentes ou plus en fonction de ladite valeur pseudo-aléatoire de la troisième séquence de données pseudo-aléatoires.

23. Décodeur (200) selon la revendication 22,
dans lequel le module de commande (210) comporte un troisième générateur de nombre pseudo-aléatoire (213) qui est conçu pour générer la troisième séquence de générateur de nombre pseudo-aléatoire, de sorte que chaque valeur pseudo-aléatoire de la troisième séquence de données pseudo-aléatoire adopte l'une parmi trois valeurs numériques différentes ou plus.

24. Décodeur (200) selon l'une des revendications 12 à 23,
dans lequel chaque de valeur binaire d'essai de la pluralité de valeurs binaires d'essai présente toujours la même valeur binaire.

25. Système, comportant:
un codeur (100) selon l'une des revendications 1 à 11 destiné à coder une valeur binaire d'entrée d'une séquence de données binaires d'entrée en générant un flux de sortie d'un signal de flux de sortie, et
un décodeur (200) selon l'une des revendications 12 à 24 destiné à décoder un flux d'entrée d'un signal de flux d'entrée en sortant une valeur binaire de sortie d'une séquence de données binaires de sortie,
dans lequel le décodeur (200) selon l'une des revendications 12 à 24 est conçu pour utiliser et décoder le flux de sortie généré par le codeur (100) selon l'une des revendications 1 à 11 comme flux d'entrée.

26. Système selon la revendication 25,
dans lequel la première séquence de données binaires pseudo-aléatoires du codeur (100) selon l'une des revendications 1 à 11 et la première séquence de données binaires pseudo-aléatoires du décodeur (200) selon l'une des revendications 12 à 24 sont identiques,
dans lequel la deuxième séquence de données binaires pseudo-aléatoires du codeur (100) selon l'une des revendications 1 à 11 et la deuxième séquence de données binaires pseudo-aléatoires du décodeur (200) selon l'une des revendications 12 à 24 sont identiques,
dans lequel l'élément à résistance commutable (120) du codeur (100) selon l'une des revendications 1 à 11 et l'élément à résistance commutable (220) du décodeur (200) selon l'une des revendications 12 à 24 sont conçus pour se trouver, à la même première tension d'entrée et à la même deuxième tension d'entrée, tous deux dans le premier état, ou tous deux dans le deuxième état, et
dans lequel l'élément de résistance commutable (120) du codeur (100) selon l'une des revendications 1 à 11 et l'élément de résistance commutable (220) du décodeur (200) selon l'une des revendications 12 à 24 sont conçus pour fournir ou sortir, suite à une application de la même troisième tension d'entrée, un même flux de sortie.

27. Procédé de codage d'une valeur binaire d'entrée d'une séquence de données d'entrée binaires en générant un flux de sortie d'un signal de flux de sortie, dans lequel un élément de résistance commutable (120) est conçu pour se trouver, en fonction d'une première tension d'entrée à un premier moment et en fonction d'une deuxième tension d'entrée à un deuxième moment ultérieur, ou bien dans un premier état, ou bien dans un deuxième état différent, dans lequel le procédé comporte le fait de:
appliquer la première tension d'entrée à l'élément de résistance commutable (120) au premier moment, de sorte que la première tension d'entrée dépende de ladite valeur binaire d'entrée,
appliquer la deuxième tension d'entrée à l'élément de résistance commutable (120) au deuxième moment, de sorte que la deuxième tension d'entrée dépende d'une valeur binaire pseudo-aléatoire parmi une pluralité de valeurs binaires pseudo-aléatoires d'une première séquence de données binaires pseudo-aléatoires,
appliquer une troisième tension d'entrée à l'élément de résistance commutable (120) à un troisième moment après le deuxième moment, de sorte que la troisième tension d'entrée dépende de ladite valeur binaire pseudo-aléatoire parmi la pluralité de valeurs binaires pseudo-aléatoires de la première séquence de données binaires pseudo-aléatoires ou dépende d'une valeur binaire pseudo-aléatoire parmi une pluralité de valeurs binaires pseudo-aléatoires d'une deuxième séquence de données binaires pseudo-aléatoires, et
suite à l'application de la troisième tension d'entrée au troisième moment, sortir ledit flux de sortie par l'élément de résistance commutable (120); de sorte que ledit flux de sortie dépende de la troisième tension d'entrée et dépende de si l'élément de résistance commutable (120) se trouve dans le premier état ou dans le deuxième état,
dans lequel la première tension d'entrée, la deuxième tension d'entrée et la troisième tension d'entrée sont appliqués, par l'intermédiaire de lignes et par l'intermédiaire d'un multiplexeur, (115) à l'élément de résistance commutable (120), dans lequel le multiplexeur (115) est conçu pour connecter les lignes.

28. Procédé de décodage d'un flux d'entrée d'un signal de flux d'entrée en sortant une valeur binaire de sortie d'une séquence de données de sortie binaires, dans lequel un élément de résistance commutable (220) est conçu pour se trouver, en fonction d'une première tension d'entrée à un premier moment et en fonction d'une deuxième tension d'entrée à un deuxième moment ultérieur, soit dans un premier état, soit dans un deuxième état différent, dans lequel le procédé comporte le fait de:
appliquer la première tension d'entrée à l'élément de résistance commutable (220) au premier moment, de sorte que la première tension d'entrée dépende d'une valeur binaire d'essai parmi une pluralité de valeurs binaires d'essai,
appliquer la deuxième tension d'entrée à l'élément de résistance commutable (220) à un deuxième moment, de sorte que la deuxième tension d'entrée dépende d'une valeur binaire pseudo-aléatoire parmi une pluralité de valeurs binaires pseudo-aléatoires d'une première séquence de données binaires pseudo-aléatoires,
appliquer une troisième tension d'entrée à l'élément de résistance commutable (220) à un troisième moment après le deuxième moment, de sorte que la troisième tension d'entrée dépende de ladite valeur binaire pseudo-aléatoire parmi la pluralité de valeurs binaires pseudo-aléatoires de la première séquence de données binaires pseudo-aléatoires ou dépende d'une valeur binaire pseudo-aléatoire parmi une pluralité de valeurs binaires pseudo-aléatoires d'une deuxième séquence de données binaires pseudo-aléatoires,
suite à l'application de la troisième tension d'entrée au troisième moment, fournir un flux de sortie par l'élément de résistance commutable (220); de sorte que ledit flux de sortie dépende de la troisième tension d'entrée et dépende de si l'élément à résistance commutable (220) se trouve dans le premier état ou dans le deuxième état, et
effectuer une comparaison entre ledit flux de sortie et ledit flux d'entrée, déterminer ladite valeur binaire de sortie en fonction de la comparaison et de ladite valeur binaire d'essai, et sortir ladite valeur binaire de sortie,
dans lequel la première tension d'entrée, la deuxième tension d'entrée et la troisième tension d'entrée sont appliqués par l'intermédiaire des lignes et par l'intermédiaire d'un multiplexeur (115) à l'élément de résistance commutable (120), dans lequel le multiplexeur (115) est conçu pour connecter les lignes.

29. Programme d'ordinateur avec un code de programme qui amène, lors de l'exécution du programme par un ordinateur, ce dernier à réaliser le procédé selon la revendication 27 ou 28.
